# EUROPEAN PATENT APPLICATION

(11) **EP 4 209 996 A1**
(43) Date of publication of application: **12.07.2023**
(21) Application number: 21874183.3
(22) Date of filing: 03.09.2021
(51) Int. Cl.: G06T 7/246

(54) **TARGET TRACKING METHOD AND ELECTRONIC DEVICE**

(30) Priority: 30.09.2020 CN 202011066347
(71) Applicant: Huawei Technologies Co., Ltd., Shenzhen, Guangdong 518129 (CN)
(72) Inventor: ZHANG, Yaqi, Shenzhen, Guangdong 518129 (CN); ZHANG, Chao, Shenzhen, Guangdong 518129 (CN); XU, Jian, Shenzhen, Guangdong 518129 (CN); LIU, Hongma, Shenzhen, Guangdong 518129 (CN)
(74) Representative: Gill Jennings & Every LLP
(86) International application number: PCT/CN2021/116453
(87) International publication number: WO 2022/068522

(57) **Abstract**

This application discloses a target tracking method and an electronic device. The method includes: An electronic device displays an N^{th} frame of image, and determines a tracking target in the N^{th} frame of image. The electronic device divides the tracking target into a plurality of tracking target images. The electronic device performs feature extraction on each of the plurality of tracking target images, to obtain a plurality of tracking target features of the tracking target. The electronic device displays an (N+1)^{th} frame of image. The electronic device detects a candidate target in the (N+1)^{th} frame of image. The electronic device divides the candidate target into a plurality of candidate target images. The electronic device performs feature extraction on each candidate target image, to obtain a candidate target feature of the candidate target. If a first candidate target feature in a plurality of candidate target features matches a first tracking target feature in the plurality of tracking target features, the electronic device determines that the candidate target is the tracking target. In this way, accuracy of performing target tracking by the electronic device can be improved.

## Description

This application claims priority to Chinese Patent Application No. 202011066347.8, filed with the China National Intellectual Property Administration on September 30, 2020 and entitled "TARGET TRACKING METHOD AND ELECTRONIC DEVICE", which is incorporated herein by reference in its entirety.

### TECHNICAL FIELD

This application relates to the field of terminals and image processing, and in particular, to a target tracking method and an electronic device.

### BACKGROUND

With continuous development of image processing technologies, target tracking is widely applied to fields such as intelligent video surveillance, self-driving, and unmanned supermarkets. Usually, an electronic device may determine a tracking target in an obtained frame of image. The electronic device may store a feature of the tracking target. Then, the electronic device performs feature matching between a feature of a candidate target in a current frame of image and the stored feature of the tracking target. If the feature of the candidate target matches the stored feature of the tracking target, the electronic device determines that the candidate target in the current frame of image is the tracking target.

However, when the tracking target in the current frame of image is partially blocked, disappears and reappears, is deformed, or the like, the electronic device possibly cannot determine the tracking target in the current frame of image. In this way, the electronic device is prone to a target tracking failure, and consequently there is low target tracking accuracy.

Therefore, when a tracking target is partially blocked, disappears and reappears, is deformed, or the like, how to improve target tracking accuracy is a problem that needs to be urgently resolved.

### SUMMARY

Embodiments of this application provide a target tracking method and an electronic device. Target tracking accuracy can be improved when the method is used in a process of performing target tracking by the electronic device.

According to a first aspect, this application provides a target tracking method. The method includes: An electronic device displays a first user interface, where an M^{th} frame of image is displayed in the first user interface, and the M^{th} frame of image includes a tracking target; the electronic device obtains a plurality of tracking target features of the tracking target; the electronic device displays a second user interface, where a K^{th} frame of image is displayed in the second user interface, the K^{th} frame of image includes a first candidate target, and the K^{th} frame of image is an image frame after the M^{th} frame of image; the electronic device obtains a plurality of candidate target features of the first candidate target; and the electronic device determines, when a first candidate target feature in the plurality of candidate target features matches a first tracking target feature in the plurality of tracking target features, that the first candidate target is the tracking target.

In this way, when the tracking target and the candidate target are a same object, but include parts of the object that are not exactly the same, the electronic device may accurately perform target tracking, and determine that the candidate target is the tracking target. For example, when the tracking target is a character A with a whole body, the electronic device may store a feature of an image corresponding to a body part above a shoulder of the character A, a feature of an image corresponding to a body part above a hip of the character A, a feature of an image corresponding to a body part above a knee of the character A, and a feature of an image corresponding to a whole body part of the character A from a head to a foot. When the candidate target is the character A who appears with only the body part above the shoulder, the electronic device may match features of images corresponding to the body part above the shoulder of the character A in two frames of images, instead of matching a feature of an image corresponding to the body part above the hip of the character A in a current frame of image and a feature of an image corresponding to the body part above the shoulder of the character A in a next frame of image. In this way, accuracy of performing target tracking by the electronic device can be improved.

With reference to the first aspect, in a possible implementation, that the electronic device obtains a plurality of tracking target features of the tracking target specifically includes: The electronic device obtains a plurality of tracking target images based on the tracking target, where the tracking target image includes a part or all of the tracking target; and the electronic device performs feature extraction on the plurality of tracking target images, to obtain the plurality of tracking target features, where a quantity of the plurality of tracking target features is equal to a quantity of the plurality of tracking target images. In this way, the electronic device may store the plurality of features of the tracking target.

With reference to the first aspect, in a possible implementation, that the electronic device divides the tracking target into a plurality of tracking target images specifically includes: The electronic device obtains the plurality of tracking target images of the tracking target based on a key point of the tracking target, where the tracking target image includes one or more key points of the tracking target. In this way, the electronic device may obtain the plurality of tracking target images of the tracking target based on the key point of the tracking target.

With reference to the first aspect, in a possible implementation, the plurality of tracking target images include a first tracking target image and a second tracking target image; and the first tracking target image and the second tracking target image include a same key point of the tracking target, and a quantity of key points of the tracking target included in the second tracking target image is greater than a quantity of key points of the tracking target included in the first tracking target image; or a key point of the tracking target included in the first tracking target image is different from a key point of the tracking target included in the second tracking target image.

In this way, the plurality of tracking target images obtained by the electronic device may include some same key points; or the plurality of tracking target images obtained by the electronic device do not include a same key point. For example, the electronic device may obtain an image of the body part above the shoulder of the character A, an image of the body part above the hip of the character A, an image of the body part above the knee of the character A, and an image of the whole body part of the character A from the head to the foot based on the complete character A; or the electronic device may obtain, based on the complete character A, an image including only the head of the character A, an image including only an upper body part (namely, a body part that is between the shoulder and the hip and that does not include the hip) of the character A, an image including only a lower body part (namely, a body part that is between the hip and the foot and that does not include the foot) of the character A, and an image including only the foot of the character A.

With reference to the first aspect, in a possible implementation, that the electronic device obtains a plurality of candidate target features of the first candidate target includes: The electronic device obtains a plurality of candidate target images based on the first candidate target, where the plurality of candidate target images include a part or all of the first candidate target; and the electronic device performs feature extraction on the plurality of candidate target images, to obtain the plurality of candidate target features, where a quantity of the plurality of candidate target features is equal to a quantity of the plurality of candidate target features. In this way, the electronic device may obtain the plurality of features corresponding to the first candidate target.

With reference to the first aspect, in a possible implementation, that the electronic device divides the first candidate target into a plurality of candidate target images specifically includes: The electronic device obtains the plurality of candidate target images based on a key point of the first candidate target, where the candidate target image includes one or more key points of the first candidate target. In this way, the electronic device may obtain the plurality of candidate target images based on the key point of the first candidate target.

With reference to the first aspect, in a possible implementation, the plurality of candidate target images include a first candidate target image and a second candidate target image; and the first candidate target image and the second candidate target image include a same key point of the first candidate target, and a quantity of key points of the first candidate target included in the second candidate target image is greater than a quantity of key points of the first candidate target included in the first candidate target image; or a key point of the first candidate target included in the first candidate target image is different from a key point of the first candidate target included in the second candidate target image. In this way, the plurality of candidate target images may include a same key point; or the plurality of candidate target images do not include a same key point.

With reference to the first aspect, in a possible implementation, the plurality of tracking target images include the first tracking target image and the second tracking target image, the plurality of tracking target images are obtained from the tracking target, the plurality of candidate target images include the first candidate target image and the second candidate target image, the plurality of candidate target images are obtained from the first candidate target, the quantity of key points of the tracking target included in the first tracking target image is the same as the quantity of key points of the first candidate target included in the first candidate target image, the quantity of key points of the tracking target included in the second tracking target image is the same as the quantity of key points of the first candidate target included in the second candidate target image, the quantity of key points of the tracking target included in the first tracking target image is greater than the quantity of key points of the tracking target included in the second tracking target image, the first tracking target feature is extracted from the first tracking target image, and the first candidate target feature is extracted from the first candidate target image. In this way, the electronic device can more accurately determine that the first candidate target feature matches the first tracking target feature. In this way, the electronic device can more accurately determine that the first candidate target is the tracking target.

With reference to the first aspect, in a possible implementation, after the electronic device determines, when the first candidate target feature in the plurality of candidate target features matches the first tracking target feature in the plurality of tracking target features, that the first candidate target is the tracking target, the method further includes: The electronic device stores a second candidate target in a feature library that stores the plurality of tracking target features, where the second candidate feature is extracted by the electronic device from a third candidate target image in the plurality of candidate target images, and a quantity of key points of the first candidate target included in the third candidate target image is greater than a quantity of key points of the tracking target included in the plurality of tracking target images.

The electronic device may add the feature corresponding to the first candidate target to the feature library of the tracking target. In this way, the tracking target corresponds to an increasing quantity of features. For example, if the tracking target is the character A who appears only with the upper body part, and the first candidate target is the character A with a whole body, the electronic device may add a feature corresponding to the lower body part of the character A to the feature library of the tracking target. When there is only the character A with the lower body part in a subsequent image frame (for example, the upper body part of the character A is blocked), the electronic device may match only a feature of the image corresponding to the lower body part of the character A, and the electronic device may accurately perform target tracking. In this way, accuracy of performing target tracking by the electronic device in the subsequent image frame is improved.

With reference to the first aspect, in a possible implementation, after the electronic device determines, when the first candidate target feature in the plurality of candidate target features matches the first tracking target feature in the plurality of tracking target features, that the first candidate target is the tracking target, the method further includes: If a difference between M and K is equal to a preset threshold, the electronic device stores the first candidate target feature in the feature library that stores the plurality of tracking target features. In other words, the electronic device updates the stored feature of the tracking target after there is an interval of image frames whose quantity is the preset threshold. In this way, the electronic device can more accurately perform target tracking in a subsequent image frame.

With reference to the first aspect, in a possible implementation, that the electronic device stores the first candidate target feature in the feature library that stores the plurality of tracking target features specifically includes: The electronic device replaces, with the first candidate target feature, the first tracking target feature in the feature library that stores the plurality of tracking target features. The electronic device may update the stored feature of the tracking target. In this way, the electronic device can more accurately perform target tracking in a subsequent image frame.

With reference to the first aspect, in a possible implementation, the method further includes: The electronic device detects the tracking target in the M^{th} frame of image; the electronic device displays a detection box in the first user interface, where the detection box is used to circle the tracking target; the electronic device receives a first user operation, where the first operation is used to select the tracking target in the first user interface; and the electronic device determines the tracking target in response to the first user operation. In this way, the electronic device can accurately determine the tracking target specified by a user.

With reference to the first aspect, in a possible implementation, the method further includes: The electronic device detects one or more candidate targets in the K^{th} frame of image, where the one or more candidate targets include the first candidate target, and an attribute of the one or more candidate targets is the same as an attribute of the tracking target. In this way, it can be ensured that the candidate target and the tracking target detected by the electronic device are a same object.

According to a second aspect, an embodiment of this application provides a target tracking method. The method includes: An electronic device displays a first user interface, where an N^{th} frame of image is displayed in the first user interface, and the N^{th} frame of image includes a tracking target; the electronic device determines the tracking target and a first posture of the tracking target in the first user interface, the electronic device performs feature extraction on the tracking target, to obtain and store a tracking target feature corresponding to the tracking target; the electronic device displays a second user interface, where an (N+1)^{th} frame of image is displayed in the second user interface, and the (N+1)^{th} frame of image includes one or more candidate targets; the electronic device determines a second posture of the one or more candidate targets, and performs feature extraction on the candidate target, to obtain a candidate target feature; and the electronic device determines that a first candidate target in the one or more candidate targets is the tracking target, and if the first posture is different from the second posture, the electronic device stores the candidate target feature in a feature library corresponding to the tracking target, where the feature library stores the tracking target feature.

In implementation of this embodiment of this application, the electronic device may perform target tracking on a specified object (for example, a character), and the tracking target may be deformed. For example, when the tracking target is a character, the character may change from a squatting posture to a sitting posture or a standing posture. In other words, a posture of the tracking target changes in consecutive image frames. The electronic device may store, in the feature library corresponding to the tracking target, features corresponding to different postures of the tracking target. Therefore, when a posture of a same character in the N^{th} frame of image and the (N+1)^{th} frame of image changes, the electronic device may also accurately detect, in the (N+1)^{th} frame of image, the tracking target specified by the user in the N^{th} frame of image. In this way, accuracy of performing target tracking by the electronic device is improved.

With reference to the second aspect, in a possible implementation, if the first posture of the tracking target is the same as a second posture of the first candidate target, the electronic device may perform feature matching between the tracking target feature and the candidate target feature. If the candidate target feature matches the tracking target feature, the electronic device determines that the first candidate target is the tracking target.

With reference to the second aspect, in a possible implementation, if there are a plurality of candidate targets in the (N+1)^{th} frame of image, the electronic device may obtain a location of the tracking target in the N^{th} frame of image, for example, a center of the tracking target is located at a first location in the N^{th} frame of image; the electronic device may obtain a location of the first candidate target in the (N+1)^{th} frame of image, for example, a center of the first candidate target is located at a second location in the (N+1)^{th} frame of image; and if a preset distance between the first location and the second location is less than a preset distance, the electronic device may determine that the first candidate target is the tracking target.

With reference to the second aspect, in a possible implementation, if the electronic device stores features of the tracking target in different postures, the electronic device may perform feature matching between a feature vector that corresponds to a posture that is the same as the second posture of the first candidate target in the stored tracking target feature and the candidate target feature, and if the feature vector matches the candidate target feature, the electronic device determines that the first candidate target is the tracking target.

According to a third aspect, an electronic device is provided. The electronic device may include a display, a processor, and a memory. The memory is coupled to the processor, and the display is coupled to the processor.

The display is configured to: display a first user interface, where an M^{th} frame of image is displayed in the first user interface, and the M^{th} frame of image includes a tracking target; and display a second user interface, where a K^{th} frame of image is displayed in the second user interface, and the K^{th} frame of image includes a first candidate target.

The processor is configured to: obtain a plurality of tracking target features of the tracking target; obtain a plurality of candidate target features of the first candidate target; and when a first candidate target feature in the plurality of candidate target features matches a first tracking target feature in the plurality of tracking target features, determine that the first candidate target is the tracking target.

The memory is configured to store the plurality of tracking target features.

In this way, when the tracking target and the candidate target are a same object, but include parts of the object that are not exactly the same, the electronic device may accurately perform target tracking, and determine that the candidate target is the tracking target. For example, when the tracking target is a character A with a whole body, the electronic device may store a feature of an image corresponding to a body part above a shoulder of the character A, a feature of an image corresponding to a body part above a hip of the character A, a feature of an image corresponding to a body part above a knee of the character A, and a feature of an image corresponding to a whole body part of the character A from a head to a foot. When the candidate target is the character A who appears with only the body part above the shoulder, the electronic device may match features of images corresponding to the body part above the shoulder of the character A in two frames of images, instead of matching a feature of an image corresponding to the body part above the hip of the character A in a current frame of image and a feature of an image corresponding to the body part above the shoulder of the character A in a next frame of image. In this way, accuracy of performing target tracking by the electronic device can be improved.

With reference to the third aspect, in a possible implementation, the processor is specifically configured to: obtain a plurality of tracking target images based on the tracking target, where the tracking target image includes a part or all of the tracking target; and perform feature extraction on the plurality of tracking target images, to obtain the plurality of tracking target features, where a quantity of the plurality of tracking target features is equal to a quantity of the plurality of tracking target images. In this way, the electronic device may store the plurality of features of the tracking target.

With reference to the third aspect, in a possible implementation, the processor is specifically configured to obtain the plurality of tracking target images based on a key point of the tracking target, where the tracking target image includes one or more key points of the tracking target. In this way, the electronic device may obtain the plurality of candidate target images based on the key point of the candidate target.

With reference to the third aspect, in a possible implementation, the plurality of tracking target images include a first tracking target image and a second tracking target image; and the first tracking target image and the second tracking target image include a same key point of the tracking target, and a quantity of key points of the tracking target included in the second tracking target image is greater than a quantity of key points of the tracking target included in the first tracking target image; or a key point of the tracking target included in the first tracking target image is different from a key point of the tracking target included in the second tracking target image.

In this way, the plurality of tracking target images obtained by the electronic device may include some same key points; or the plurality of tracking target images obtained by the electronic device do not include a same key point. For example, the electronic device may obtain an image of the body part above the shoulder of the character A, an image of the body part above the hip of the character A, an image of the body part above the knee of the character A, and an image of the whole body part of the character A from the head to the foot based on the complete character A; or the electronic device may obtain, based on the complete character A, an image including only the head of the character A, an image including only an upper body part (namely, a body part that is between the shoulder and the hip and that does not include the hip) of the character A, an image including only a lower body part (namely, a body part that is between the hip and the foot and that does not include the foot) of the character A, and an image including only the foot of the character A.

With reference to the third aspect, in a possible implementation, the processor is configured to: obtain a plurality of candidate target images based on the first candidate target, where the plurality of candidate target images include a part or all of the first candidate target; and perform feature extraction on the plurality of candidate target images, to obtain the plurality of candidate target features, where a quantity of the plurality of candidate target features is equal to a quantity of the plurality of candidate target features. In this way, the electronic device may obtain the plurality of features corresponding to the first candidate target.

With reference to the third aspect, in a possible implementation, the processor is specifically configured to obtain the plurality of candidate target images based on a key point of the first candidate target, where the candidate target image includes one or more key points of the first candidate target. In this way, the electronic device may obtain the plurality of candidate target images based on the key point of the first candidate target.

With reference to the third aspect, in a possible implementation, the plurality of candidate target images include a first candidate target image and a second candidate target image; and the first candidate target image and the second candidate target image include a same key point of the first candidate target, and a quantity of key points of the first candidate target included in the second candidate target image is greater than a quantity of key points of the first candidate target included in the first candidate target image; or a key point of the first candidate target included in the first candidate target image is different from a key point of the first candidate target included in the second candidate target image. In this way, the plurality of candidate target images may include a same key point; or the plurality of candidate target images do not include a same key point.

With reference to the third aspect, in a possible implementation, the plurality of tracking target images include the first tracking target image and the second tracking target image, the plurality of tracking target images are obtained from the tracking target, the plurality of candidate target images include the first candidate target image and the second candidate target image, the plurality of candidate target images are obtained from the first candidate target, the quantity of key points of the tracking target included in the first tracking target image is the same as the quantity of key points of the first candidate target included in the first candidate target image, the quantity of key points of the tracking target included in the second tracking target image is the same as the quantity of key points of the first candidate target included in the second candidate target image, the quantity of key points of the tracking target included in the first tracking target image is greater than the quantity of key points of the tracking target included in the second tracking target image, the first tracking target feature is extracted from the first tracking target image, and the first candidate target feature is extracted from the first candidate target image. In this way, the electronic device can more accurately determine that the first candidate target feature matches the first tracking target feature. In this way, the electronic device can more accurately determine that the first candidate target is the tracking target.

With reference to the third aspect, in a possible implementation, the memory is configured to store a second candidate target in a feature library that stores the plurality of tracking target features, where the second candidate feature is extracted by the processor from a third candidate target image in the plurality of candidate target images, and a quantity of key points of the first candidate target included in the third candidate target image is greater than a quantity of key points of the tracking target included in the plurality of tracking target images.

The electronic device may add the feature corresponding to the first candidate target to the feature library of the tracking target. In this way, the tracking target corresponds to an increasing quantity of features. For example, if the tracking target is the character A who appears only with the upper body part, and the first candidate target is the character A with a whole body, the electronic device may add a feature corresponding to the lower body part of the character A to the feature library of the tracking target. When there is only the character A with the lower body part in a subsequent image frame (for example, the upper body part of the character A is blocked), the electronic device may match only a feature of the image corresponding to the lower body part of the character A, and the electronic device may accurately perform target tracking. In this way, accuracy of performing target tracking by the electronic device in the subsequent image frame is improved.

With reference to the third aspect, in a possible implementation, the memory is configured to: if a difference between M and K is equal to a preset threshold, store the first candidate target feature in the feature library that stores the plurality of tracking target features. In other words, the electronic device updates the stored feature of the tracking target after there is an interval of image frames whose quantity is the preset threshold. In this way, the electronic device can more accurately perform target tracking in a subsequent image frame.

With reference to the third aspect, in a possible implementation, the memory is configured to replace, with the first candidate target feature, the first tracking target feature in the feature library that stores the plurality of tracking target features. The electronic device may update the stored feature of the tracking target. In this way, the electronic device can more accurately perform target tracking in a subsequent image frame.

According to a fourth aspect, an electronic device is provided, and includes one or more touchscreens, one or more storage modules, and one or more processing modules. The one or more storage modules store one or more programs. When the one or more processing modules execute the one or more programs, the electronic device is enabled to implement the method in any one of the possible implementations of the first aspect or the second aspect.

According to a fifth aspect, an electronic device is provided, and includes one or more touchscreens, one or more memories, and one or more processors. The one or more memories store one or more programs. When the one or more processors execute the one or more programs, the electronic device is enabled to implement the method in any one of the possible implementations of the first aspect or the second aspect.

According to a sixth aspect, a computer-readable storage medium is provided, and includes instructions. When the instructions are run on an electronic device, the electronic device is enabled to perform any one of the possible implementations of the first aspect or the second aspect.

According to a seventh aspect, a computer product is provided. When the computer program product is run on a computer, the computer is enabled to perform any one of the possible implementations of the first aspect or the second aspect.

### BRIEF DESCRIPTION OF DRAWINGS

FIG. 1 is a schematic diagram of a user interface of a tablet computer 10 according to an embodiment of this application;
FIG. 2 is a schematic diagram of a user interface of a tablet computer 10 according to an embodiment of this application;
FIG. 3 is a schematic diagram of a user interface of a tablet computer 10 according to an embodiment of this application;
FIG. 4 is a schematic diagram of a user interface of a tablet computer 10 according to an embodiment of this application;
FIG. 5A and FIG. 5B are schematic diagrams of a user interface of a tablet computer 10 according to an embodiment of this application;
FIG. 6 is a schematic diagram of a user interface of a tablet computer 10 according to an embodiment of this application;
FIG. 7 is a schematic diagram of a user interface of a tablet computer 10 according to an embodiment of this application;
FIG. 8 is a schematic diagram of a user interface of a tablet computer 10 according to an embodiment of this application;
FIG. 9 is a schematic diagram of a user interface of a tablet computer 10 according to an embodiment of this application;
FIG. 10 is a schematic diagram of a user interface of a tablet computer 10 according to an embodiment of this application;
FIG. 11 is a schematic diagram of a tracking target and a feature corresponding to the tracking target according to an embodiment of this application;
FIG. 12 is a schematic diagram of a user interface in which a tablet computer 10 detects no tracking target according to an embodiment of this application;
FIG. 13 is a schematic diagram of a character A and a feature corresponding to the character A in an (N+1)^{th} frame of image according to an embodiment of this application;
FIG. 14 is a schematic diagram of a character A and a feature corresponding to the character A in an (N+1)^{th} frame of image according to an embodiment of this application;
FIG. 15 is a schematic diagram of a human body key point according to an embodiment of this application;
FIG. 16 is a schematic diagram of a tracking target, an input image corresponding to the tracking target, and a feature corresponding to the input image according to an embodiment of this application;
FIG. 17 is a schematic diagram of a user interface in which a tablet computer 10 detects a tracking target according to an embodiment of this application;
FIG. 18 is a schematic diagram of a candidate target character A, an input image corresponding to the candidate target character A, and a feature corresponding to the input image according to an embodiment of this application;
FIG. 19 is a schematic diagram of a candidate target character B, an input image corresponding to the candidate target character B, and a feature corresponding to the input image according to an embodiment of this application;
FIG. 20 is a schematic flowchart of a target tracking method according to an embodiment of this application;
FIG. 21 is a schematic diagram of a user interface for selecting a tracking target according to an embodiment of this application;
FIG. 22 is a schematic diagram of a tracking target, an input image corresponding to the tracking target, and a feature corresponding to the input image according to an embodiment of this application;
FIG. 23 is a schematic flowchart of a target tracking method according to an embodiment of this application;
FIG. 24 is a schematic flowchart of images of a character A in different postures and features corresponding to the character A in different postures according to an embodiment of this application;
FIG. 25 is a schematic diagram of a tracking target and a feature corresponding to the tracking target according to an embodiment of this application;
FIG. 26 is a schematic diagram of a candidate target and a feature corresponding to the candidate target according to an embodiment of this application;
FIG. 27 is a schematic diagram of a tracking target and a feature corresponding to the tracking target according to an embodiment of this application;
FIG. 28 is a schematic diagram of a tracking target and a feature corresponding to the tracking target according to an embodiment of this application;
FIG. 29 is a schematic diagram of a hardware structure of an electronic device according to an embodiment of this application; and
FIG. 30 is a schematic diagram of a software framework of an electronic device according to an embodiment of this application.

### DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

In the following descriptions, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in this specification, claims, and accompanying drawings of this application is a medium interface for interaction and information exchange between an application or an operating system and a user, and implements conversion between an internal form of information and a form acceptable to the user. A user interface of an application is source code written in a specific computer language, for example, Java or an extensible markup language (extensible markup language, XML). The source code of the interface is parsed and rendered on a terminal device, and is finally presented as user-recognizable content, for example, a control, for example, an image, text, or a button. A control (control) is also referred to as a widget (widget), and is a basic element of a user interface. Typical controls include a toolbar (toolbar), a menu bar (menu bar), an input box, a button (button), a scrollbar (scrollbar), an image, and text. An attribute and content of a control in the interface are defined by using a tag or a node. For example, the control included in the interface is defined in the XML by using a node, for example, <Textview>, <ImgView>, or <VideoView>. One node corresponds to one control or one attribute in the interface. After being parsed and rendered, the node is presented as user-visible content. In addition, interfaces of many applications such as a hybrid application (hybrid application) usually further include a web page. A web page, also referred to as a page, may be understood as a special control embedded in an interface of an application. The web page is source code written in a specific computer language, for example, a hypertext markup language (hypertext markup language, HTML), cascading style sheets (cascading style sheets, CSS), or JavaScript (JavaScript, JS). The web page source code may be loaded and displayed as user-recognizable content by a browser or a web page display component that has a function similar to a function of a browser. Specific content included on the web page is also defined by using a tag or a node in the web page source code. For example, an element and an attribute of the web page are defined in the HTML by using <p>, <img>, <video>, or <canvas>.

The user interface is usually represented in a form of a graphical user interface (graphic user interface, GUI), and is a user interface that is related to a computer operation and that is displayed in a graphic manner. The graphical user interface may be an interface element such as a window or a control displayed on a display of an electronic device.

For ease of understanding, related terms and concepts in the embodiments of this application are first described below.

### (1) Target tracking

Consecutive image frames are displayed on a display of an electronic device. The image frame may be obtained by a camera of the electronic device. Alternatively, the image frame may be sent by a video surveillance device to the electronic device. A user may select a tracking target from an N^{th} frame in the consecutive image frames displayed by the electronic device. Target tracking in the embodiments of this application means that the electronic device may determine, from an image frame (for example, an (N+1)^{th} frame) after the N^{th} frame in the consecutive image frames, the tracking target (a character or an object) selected by the user. The electronic device may mark the tracking target in the image frame.

Herein, the electronic device is a device that can display consecutive image frames, for example, a mobile phone, a tablet computer, a computer, or a television. The electronic device is not limited in the embodiments of this application. The video surveillance device is a device that can collect an image, for example, a network camera or an infrared camera. The video surveillance device is not limited in the embodiments of this application.

In the embodiments of this application, a frame of image displayed by the electronic device may be referred to as an image frame or an N^{th} frame of image.

### (2) Tracking target

In the embodiments of this application, an object (for example, a character, a plant, or a vehicle) that is specified by the user in the N^{th} frame of image and that is used for tracking and detection is referred to as the tracking target.

### (3) Candidate target

In the embodiments of this application, an object that appears in a subsequent image frame of the N^{th} frame of image and that belongs to a same type as the tracking target is referred to as the candidate target. An attribute of the candidate target is the same as that of the tracking target. Herein, the attribute may refer to a type of the object, a color of the object, a gender of the object, a height of the object, or the like. This is not limited herein. For example, if the tracking target is a character, all characters that appear in the subsequent image frame of the N^{th} frame of image are candidate targets; or if the tracking target is a vehicle, all vehicles that appear in the subsequent image frame or video frame of the N^{th} frame of image are candidate targets. It may be understood that the electronic device may detect that the tracking target is a character. Then, the electronic device may detect a character in a subsequent image of the N^{th} frame. All detected characters are candidate objects. How the electronic device detects a character is described below. Details are not described herein.

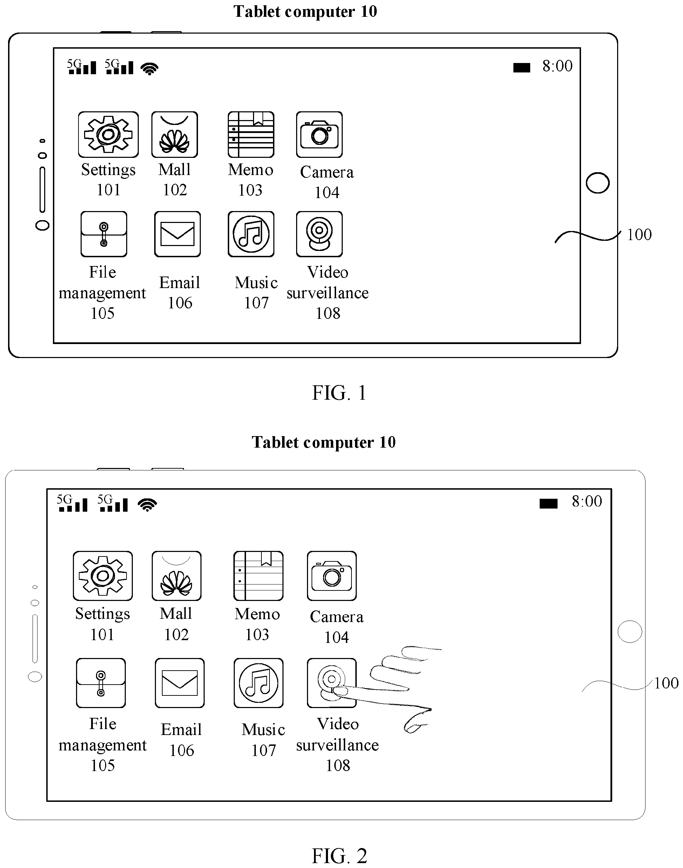

A specific process in which the electronic device performs target tracking is briefly described below by using an example in which the electronic device is a tablet computer. FIG. 1 to FIG. 14 show an example of a process of performing target tracking by a tablet computer 10.

FIG. 1 shows an example of a user interface 100 of the tablet computer 10. The user interface 100 may include icons of some applications, for example, a settings icon 101, a mall icon 102, a memo icon 103, a camera icon 104, a file management icon 105, an email icon 106, a music icon 107, and a video surveillance icon 108. In some embodiments, the user interface 100 may include icons of more or fewer applications. In some embodiments, the user interface 100 may include icons of some applications different from the applications shown in FIG. 1, for example, a video icon and an instant messaging application icon. This is not limited herein.

FIG. 2 shows a user interface 100 of the tablet computer 10. A user may tap the video surveillance icon 108. In response to the user operation, the tablet computer may display a user interface 200.

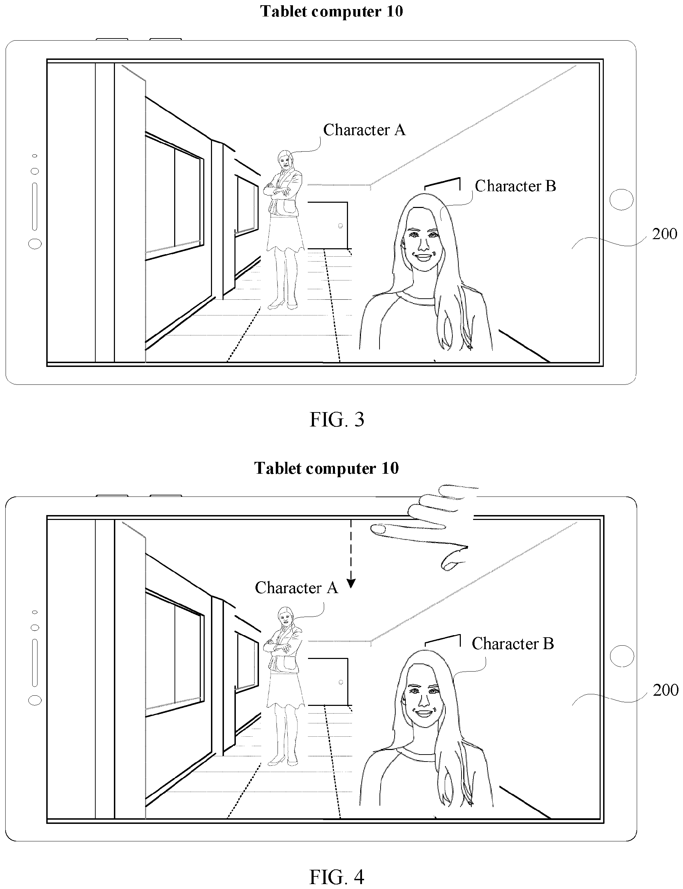

FIG. 3 shows an example of the user interface 200 of the tablet computer 10. A frame of image is currently displayed in the user interface 200. The image frame displayed in the user interface 200 may include a character A and a character B. The frame of image may be obtained by a camera of the tablet computer 10. The frame of image may alternatively be sent to the tablet computer 10 by a video surveillance device.

It may be understood that if the image frame displayed in the user interface 200 of the tablet computer 10 is obtained by the video surveillance device and sent to the tablet computer 10, before the tablet computer 10 may display the image frame obtained by the video surveillance device, the user may establish a communication connection between the tablet computer 10 and the video surveillance device. In a possible implementation, the user may establish a communication connection between the tablet computer 10 and the video surveillance device in a video surveillance application. Optionally, the tablet computer 10 may establish a communication connection to the video surveillance device by using Bluetooth. Optionally, the tablet computer 10 may alternatively establish a communication connection to the video surveillance device by using a wireless local area network (Wireless Local Area Network, WLAN). In this way, the tablet computer 10 may display the image frame obtained by the video surveillance device in real time. It may be understood that a manner in which the tablet computer 10 establishes a communication connection to the video surveillance device is not limited.

As shown in the user interface 200 of the tablet computer 10 shown in FIG. 4, the user may slide down at a top of the user interface 200. In response to the user operation, the tablet computer 10 may display a user interface 300.

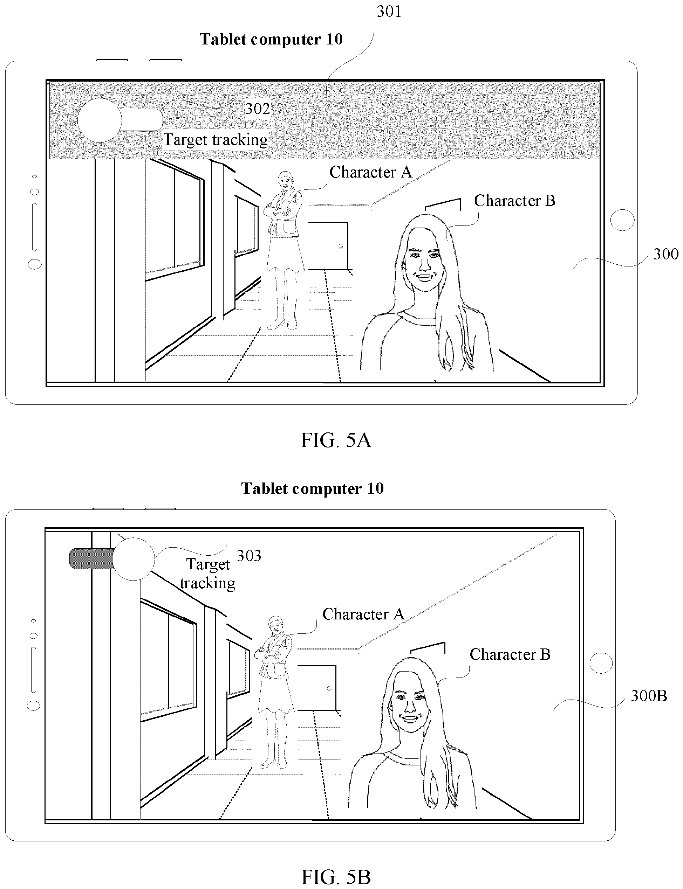

FIG. 5A shows an example of the user interface 300 of the tablet computer 10. The user interface 300 may include an image frame (the image frame may include the character A and the character B) and a status bar 301. The status bar 301 may include a control 302. The status bar 301 may include more controls, for example, a pause control (not shown) used to control play pause of an image frame, and a brightness adjustment control (not shown) used to adjust brightness of the image frame. In this embodiment of this application, a quantity of controls in the status bar 301, a specific control, and a location of the status bar 301 in the user interface 300 are not limited. The user may enable or disable a target tracking function of the tablet computer 10 by using the control 302.

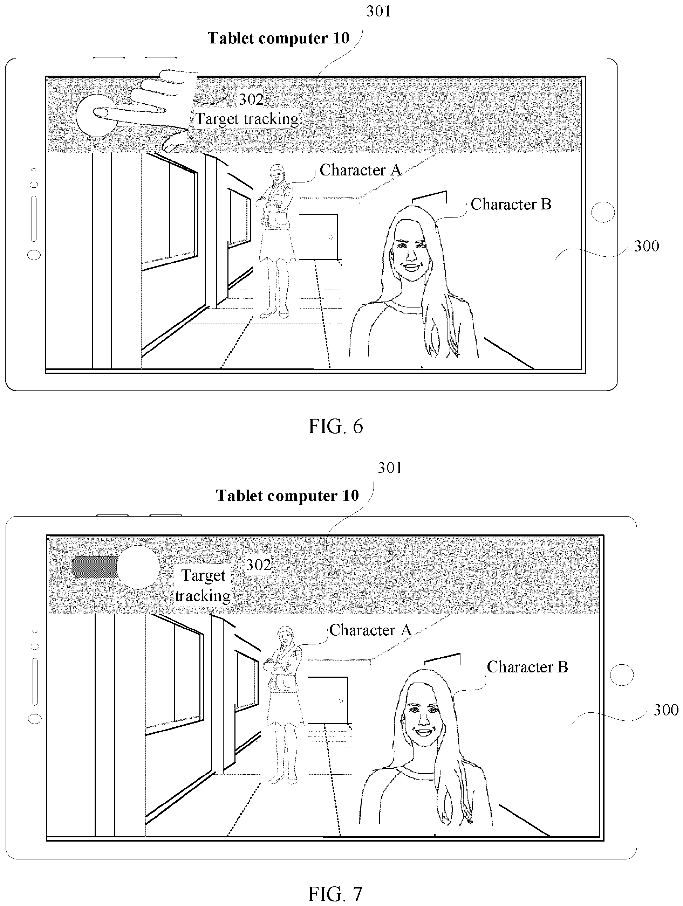

It may be understood that there may be a plurality of forms of user interfaces used by the tablet computer 10 to turn on or turn off the tablet computer 10, and the user interfaces are not limited to the user interface 300 shown in FIG. 5A, for example, a user interface 300B of the tablet computer shown in FIG. 5B. The user interface 300B may include an image frame (the image frame may include the character A and the character B) and a control 303. The control 303 is used to enable or disable a target tracking function of the tablet computer 10. A location of the control 303 in the user interface 300B is not limited. FIG. 6 shows the user interface 300 of the tablet computer 10. The user may tap the control 302 to enable the target tracking function of the tablet computer 10. FIG. 7 shows the user interface 300 of the tablet computer 10. A status of the control 302 in the user interface 300 in FIG. 7 indicates that the target tracking function of the tablet computer 10 is enabled. In response to the operation of enabling the target tracking function of the tablet computer 10 by the user, the tablet computer 10 displays a user interface 400.

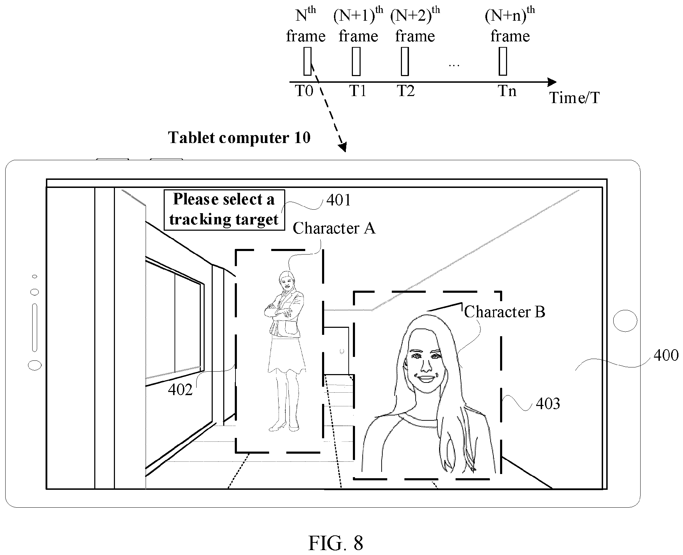

FIG. 8 shows an example of the user interface 400 of the tablet computer 10. An N^{th} frame of image obtained by the camera of the tablet computer 10 or the video surveillance device at a moment T0 is displayed in the user interface 400. The N^{th} frame of image may include the character A and the character B. The user interface 400 may further include text 401. The text 401 is used to prompt the user to select a tracking target in the N^{th} frame of image. Specific text content of the text 401 may be "please select the tracking target" or other content. This is not limited herein. The tablet computer 10 may detect the character A and the character B in the N^{th} frame of image. The tablet computer 10 displays a detection box 402 and a detection box 403 in the user interface 400. The detection box 402 is used to circle the character A, that is, it indicates that the tablet computer 10 detects the character A in the user interface 400. The detection box 403 is used to circle the character B, that is, it indicates that the tablet computer 10 detects the character B in the user interface 400. As shown in FIG. 8, the tablet computer 10 may display a sequence of consecutive image frames at the moment T0 to a moment Tn. To be specific, the tablet computer displays the N^{th} frame of image at the moment T0, displays an (N+1)^{th} frame of image at a moment T1, displays an (N+2)^{th} frame of image at a moment T2, and displays an (N+n)^{th} frame of image at the moment Tn.

In some embodiments, the tablet computer 10 may not display the detection box 402 and the detection box 403.

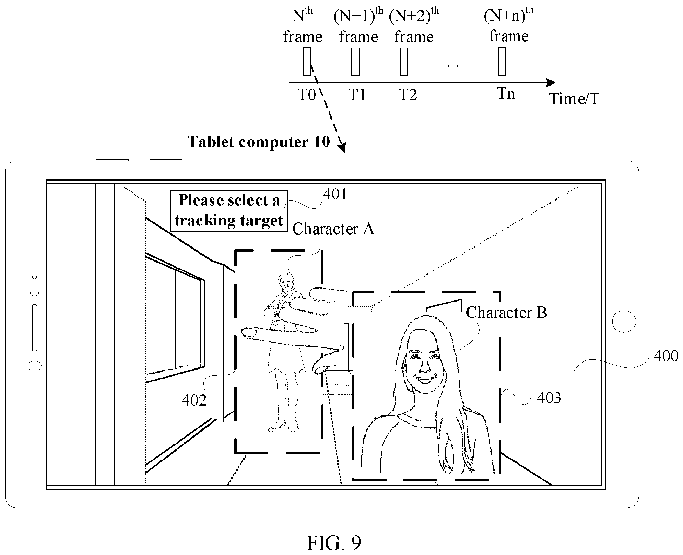

FIG. 9 shows the user interface 400 of the tablet computer 10. The user may select the character A in the N^{th} frame of image as the tracking target. As shown in FIG. 9, the user may tap the character A to select the character A as the tracking target. In response to the user operation, the tablet computer 10 may display a user interface 500.

In some embodiments, when the tablet computer 10 does not display the detection box 402 and the detection box 403, the user draws a box to circle the tracking target. The tablet computer 10 uses an image circled by the user as the tracking target.

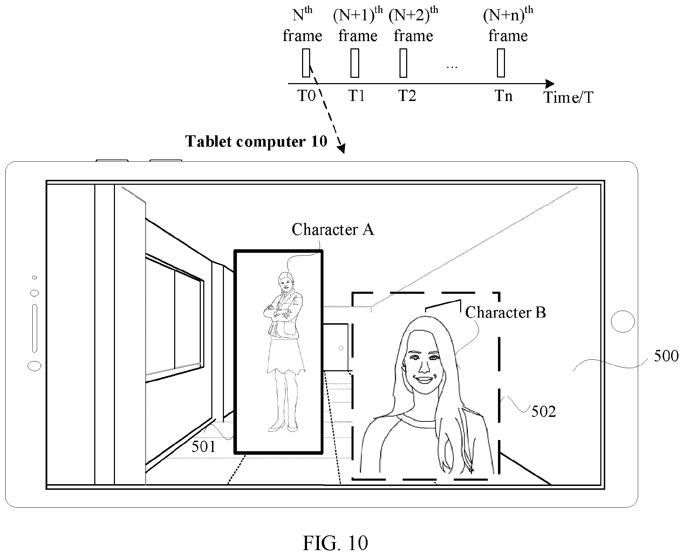

FIG. 10 shows the user interface 500 of the tablet computer 10. The N^{th} frame of image is displayed in the user interface 500. The N^{th} frame of image may include the character A and the character B. The user interface 500 may include an indication box 501 and a detection box 502. The indication box 501 is used to indicate that a circled object (for example, the character A) is the tracking target. The detection box 502 is used to circle the character B, that is, it indicates that the tablet computer 10 detects the character B in the user interface 500. In response to an operation of selecting the tracking target by the user, the tablet computer 10 may perform feature extraction on the tracking target selected by the user. The tablet computer 10 may further store a feature of the tracking target.

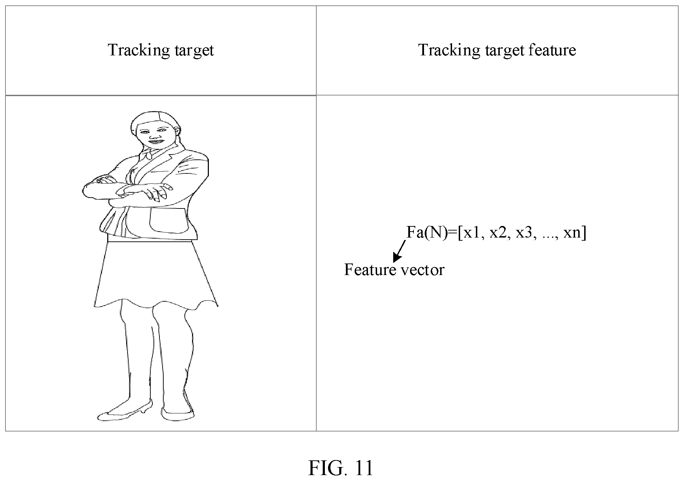

FIG. 11 shows an example of the tracking target and the feature corresponding to the tracking target in FIG. 10. As shown in FIG. 11, in response to the operation of selecting the tracking target by the user, the tablet computer 10 performs feature extraction on the character A, and stores a feature of the character A. The tracking target, namely, the feature of the character A in the N^{th} frame of image, may be represented by a feature vector Fa(N). For example, Fa(N)=[x1, x2, x3, ..., xn]. The feature vector Fa(N) may represent a color feature, a texture feature, or the like of the character A. A specific form and magnitude of the feature vector Fa(N) of the character A are not limited herein. For example, Fa(N) may be a feature vector [0.5, 0.6, 0.8, ..., 0.9, 0.7, 0.3] including n values. Herein, n is an integer, and may be 128, 256, 512, or the like. A value of n is not limited. The tablet computer 10 may store the feature vector Fa(N) in an internal memory.

After the user specifies the tracking target, the tablet computer 10 tracks the tracking target in an image frame after the N^{th} frame of image.

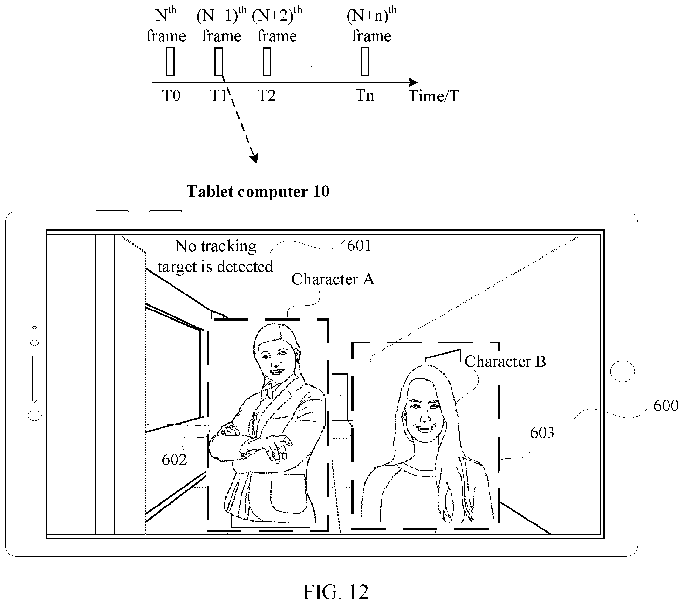

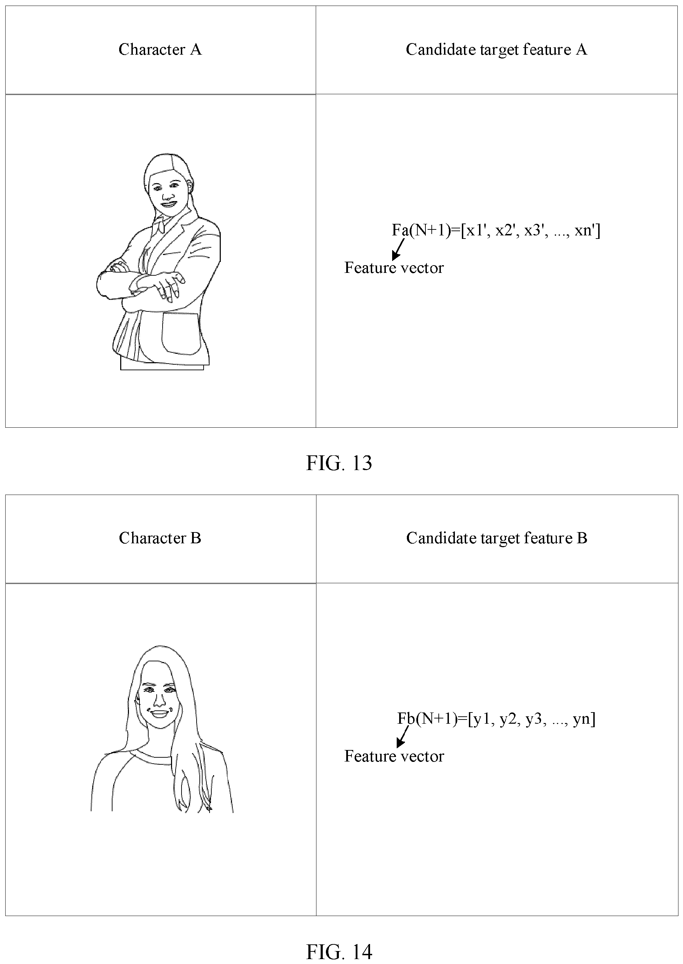

FIG. 12 shows an example of a user interface 600 of the tablet computer 10. The (N+1)^{th} frame of image is displayed in the user interface 600. The (N+1)^{th} frame of image may be a next frame of image of the image frame displayed in the user interface 500. The (N+1)^{th} frame of image may include the character A and the character B. The user interface 600 may further include text 601, a detection box 602, and a detection box 603. The text 601 is used to prompt the user whether the tracking target is detected. Herein, the feature of the character A extracted by the tablet computer 10 from the N^{th} frame of image does not match a feature of the character A in the (N+1)^{th} frame of image. For details herein, refer to the following description in FIG. 13 and FIG. 14. Details are not described herein. The tablet computer 10 may prompt, in the text 601, the user that no tracking target is detected in the (N+1)^{th} frame of image. Specific content of the text 601 may be "no tracking target is detected". The specific content of the text 601 may alternatively be other content, for example, "target tracking fails" or "target tracking succeeds". The specific content of the text 601 is not limited herein. The detection box 602 is used to circle the character A, that is, it indicates that the tablet computer 10 detects the character A in the user interface 600. The detection box 603 is used to circle the character B, that is, it indicates that the tablet computer 10 detects the character B in the user interface 600.

The tablet computer 10 may perform feature extraction on the character A and the character B detected in the user interface 600. Then, the tablet computer 10 may match an extracted feature of the character A and an extracted feature of the character B with the stored feature of the tracking target. When the feature of the character A and the feature of the character B match the stored feature of the tracking target, the tablet computer 10 may prompt the user that target tracking succeeds and the tracking target is indicated. When the feature of the character A or the feature of the character B does not match the stored feature of the tracking target, the tablet computer 10 may prompt the user that the tracking target is not detected or tracking fails.

FIG. 13 shows an example of the character A and the feature corresponding to the character A in the user interface 600. Only an upper body part of the character A appears in the user interface 600. The tablet computer 10 may perform feature extraction on the character A, to obtain the feature of the character A. The feature (namely, a candidate target tracking target feature shown in FIG. 13) of the character A may be represented by a feature vector Fa(N+1). The feature vector Fa(N+1) may include a texture feature, a color feature, and another feature of the character A. This is not limited herein.

FIG. 14 shows an example of the character B and the feature corresponding to the character B in the user interface 600. The tablet computer 10 may perform feature extraction on the character B, to obtain the feature of the character B. The feature (namely, a candidate target feature shown in FIG. 14) of the character B may be represented by a feature vector Fb(N+1). The feature vector Fb(N+1) may include a texture feature, a color feature, and another feature of the character B. This is not limited herein.

The tablet computer 10 may perform feature matching between the stored feature Fa(N) of the tracking target and each of the feature Fa(N+1) of the character A and the feature Fb(N+1) of the character B in the user interface 600. If the feature Fa(N+1) matches the feature Fa(N), the tablet computer 10 successfully detects the tracking target. Otherwise, the tablet computer 10 prompts that no tracking target is detected. The character A (namely, the tracking target) in the user interface 400 and the character A in the user interface 600 are actually a same character. However, a whole body of the character A appears in the user interface 400, and the tablet computer 10 may extract a feature of the whole body of the character A, and store the feature of the whole body of the character A; and only a half of the body of the character A appears in the user interface 600, and the tablet computer 10 can extract only a feature of the half of the body of the character A. In this way, when the tablet computer 10 performs feature matching, the feature of the character A in the user interface 400 does not match the feature of the character A in the user interface 600. In this way, when the tracking target is blocked (for example, a half of the body is blocked), the tablet computer 10 cannot correctly perform target tracking.

In addition, when the tracking target is deformed (the tracking target has a different posture), the tablet computer 10 performs feature extraction only on the tracking target specified by the user in the N^{th} frame of image, and stores the extracted feature. If the tracking target specified in the N^{th} frame of image is complete (for example, a standing character A), and the tracking target in the (N+1)^{th} frame of image is deformed (for example, a squatting character A), because the tablet computer 10 stores only the feature of the standing character A, and uses the feature as the feature of the tracking target, and features extracted by the tablet computer 10 from the standing character A and the squatting character A are different, the tablet computer 10 cannot correctly determine that the standing character A and the squatting character A are a same character. In this way, the tablet computer 10 is prone to a target tracking failure, and consequently there is low target tracking accuracy.

When the tracking target disappears and reappears, for example, the character A with a whole body appears in a first frame of image, the character A disappears in a second frame of image, and the character A with a half of the body appears in a third frame of image, the tablet computer 10 is prone to a target tracking failure, and consequently there is low target tracking accuracy.

To improve accuracy of performing target tracking by an electronic device, an embodiment of this application provides a target tracking method. The method includes: An electronic device displays an N^{th} frame of image, and determines a tracking target in the N^{th} frame of image; the electronic device divides the tracking target into a plurality of tracking target images based on a first preset rule; the electronic device performs feature extraction on each of the plurality of tracking target images, to obtain a plurality of tracking target features of the tracking target; the electronic device stores the plurality of tracking target features of the tracking target; the electronic device displays an (N+1)^{th} frame of image; the electronic device detects a candidate target in the (N+1)^{th} frame of image; the electronic device divides the candidate target into a plurality of candidate target images based on the first preset rule; the electronic device performs feature extraction on each candidate target image, to obtain a candidate target feature of the candidate target; the electronic device selects a first candidate target feature in a plurality of candidate target features to perform feature matching with a first tracking target in the plurality of tracking target features; and if the first candidate target feature matches the first tracking target feature, the electronic device determines that the candidate target is the tracking target.

In this embodiment of this application, a K^{th} frame of image is an image frame after an M^{th} frame of image. The M^{th} frame of image may be the N^{th} frame of image in the embodiments of this application, and the K^{th} frame of image may be the (N+1)^{th} frame of image, an (N+2)^{th} frame of image, or an (N+n)^{th} frame of image in the embodiments of this application.

An example in which the electronic device is a tablet computer is used below to describe a specific process in which the tablet computer performs target tracking according to a target tracking method provided in an embodiment of this application.

### 1. Enable a target tracking function.

When the tablet computer performs target tracking, the target tracking function needs to be enabled first. For a specific process in which a user turns on the tablet computer, refer to the foregoing description in FIG. 1 to FIG. 6. Details are not described herein.

### 2. Determine a tracking target in an N^{th} frame of image.

For a specific process of determining the tracking target by the tablet computer 10, refer to the foregoing description in FIG. 8 and FIG. 9. Details are not described herein. As shown in FIG. 9, the user selects a character A in the N^{th} frame of image as the tracking target. In response to a user operation, the tablet computer 10 determines that the character A in the N^{th} frame of image is the tracking target.

### 3. Extract and store a feature of the tracking target.

The tablet computer 10 may divide the character A in a user interface 500 into a plurality of images based on a specific preset rule (for example, a human body key point). The tablet computer 10 performs feature extraction on the plurality of images, to obtain and store a feature corresponding to each image.

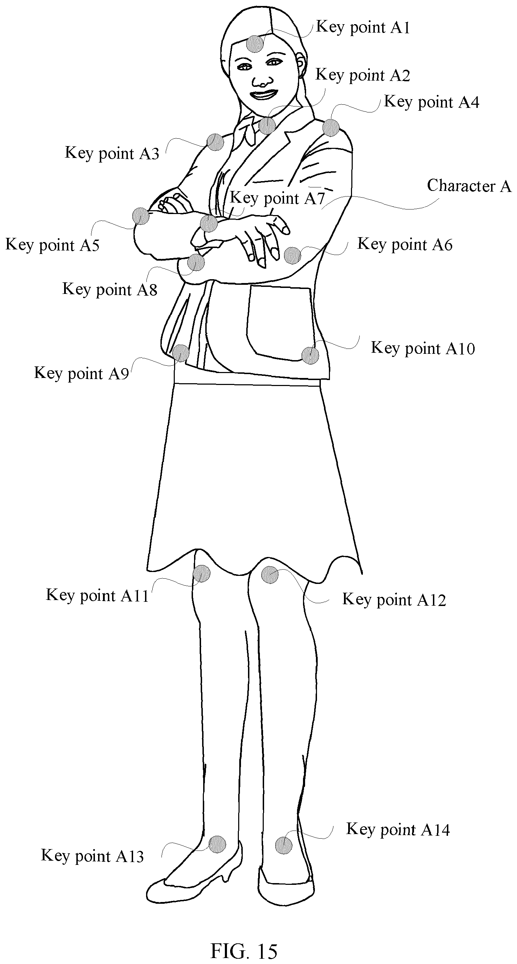

FIG. 15 is an example of a schematic diagram of a human body key point. As shown in FIG. 15, human body key points of the character A may include a total of 14 key points: a key point A1 to a key point A14. The key point A1 to the key point A14 may be basic human body bone points. For example, the key point A1 may be a head bone point of the human body, a key point A2 may be a neck bone point of the human body, a key point A3 may be a left shoulder bone point of the human body, a key point A4 may be a right shoulder bone point of the human body, a key point A5 may be a left elbow bone point of the human body, a key point A6 may be a right elbow bone point of the human body, a key point A7 may be a left hand bone point of the human body, a key point A8 may be a right hand bone point of the human body, a key point A9 may be a left hip bone point of the human body, a key point A10 may be a right hip bone point of the human body, a key point A11 may be a left knee bone point of the human body, a key point A12 may be a right knee bone point of the human body, a key point A13 may be a left foot bone point of the human body, and the key point A14 may be a right foot bone point of the human body.

The tablet computer 10 may recognize the human body key point. How the tablet computer recognizes the human body key point is described in subsequent content. Details are not described herein.

The tablet computer 10 may divide, based on the human body key point, an image of the tracking target specified by the user into a plurality of input images used for feature extraction. The tablet computer 10 may perform feature extraction on each input image, to obtain a feature of the input image, and store the feature of the input image.

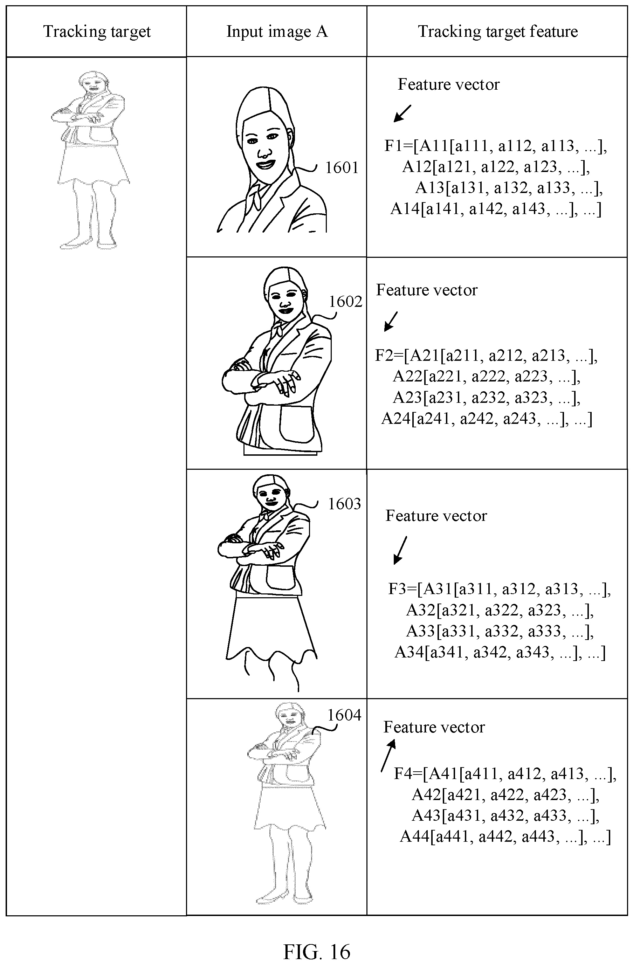

FIG. 16 shows an example of an input image for feature extraction corresponding to the tracking target and a feature corresponding to the input image. As shown in FIG. 16, the character A (namely, the tracking target) in the user interface 500 may be divided, based on the key point, into four input images used for feature extraction. That is, the tracking target may be divided into an input image 1601, an input image 1602, an input image 1603, and an input image 1604 based on the key point. Specifically, a body part (namely, a body part above a shoulder of the tracking target) that includes the key point A1 to the key point A4 in the tracking target may be divided into one image (namely, the input image 1601) used for feature extraction, a body part (namely, a body part above a hip of the tracking target) that includes the key point A1 to the key point A10 in the tracking target may be divided into one image (namely, the input image 1602) used for feature extraction, a body part (namely, a body part above a knee of the tracking target) that includes the key point A1 to the key point A12 in the tracking target may be divided into one image (namely, the input image 1603) used for feature extraction, and a body part (namely, a whole body part of the tracking target from a head to a foot) that includes the key point A1 to the key point A14 in the tracking target may be divided into one image (namely, the input image 1604) used for feature extraction.

Key points included in the input image 1601 to the input image 1604 gradually increase. In other words, the input image 1602 includes more key points than the input image 1601. The input image 1602 may include a key point in the input image 1601. That is, the input image 1602 and the input image 1601 include a same body part (namely, the body part above the shoulder) of the tracking target. The input image 1603 includes more key points than the input image 1602. The input image 1603 may include a key point in the input image 1602. That is, the input image 1603 and the input image 1602 include a same body part (namely, the body part above the hip) of the tracking target. The input image 1604 includes more key points than the input image 1603. The input image 1604 may include a key point in the input image 1603. That is, the input image 1604 and the input image 1603 include a same body part (namely, the body part above the knee) of the tracking target.

The tablet computer 10 performs feature extraction on the input image 1601, to obtain a feature of the input image 1601. For example, the feature of the input image 1601 may be represented by a feature vector F1. F1 may represent one or more of features such as a color feature, a texture feature, and a transformation feature of the input image 1601. This is not limited herein. For specific features such as the color feature, the texture feature, and the transformation feature of the input image 1601, refer to description in the conventional technology. Details are not described herein. The tablet computer 10 performs feature extraction on the input image 1602, to obtain a feature of the input image 1602. The feature of the input image 1602 may be represented by a feature vector F2. F2 may represent one or more of features such as a color feature, a texture feature, and a transformation feature of the input image 1602. This is not limited herein. The tablet computer 10 performs feature extraction on the input image 1603, to obtain a feature of the input image 1603. The feature of the input image 1603 may be represented by a feature vector F3. F3 may represent one or more of features such as a color feature, a texture feature, and a transformation feature of the input image 1603. This is not limited herein. The tablet computer 10 performs feature extraction on the input image 1604, to obtain a feature of the input image 1604. The feature of the input image 1604 may be represented by a feature vector F4. F4 may represent one or more of features such as a color feature, a texture feature, and a transformation feature of the input image 1604. This is not limited herein.

In this way, the tablet computer 10 may store features of the tracking target in a plurality of dimensions. It may be understood that in FIG. 16, the tracking target is divided into the four input images, and the features of the four input images are obtained and stored. However, in this embodiment of this application, how the tracking target is specifically divided into input images used for feature extraction is not limited. For example, the tablet computer 10 may divide the tracking target into more or fewer input images based on the key point. This is not limited herein. A feature extraction method of the input image is not limited in this embodiment of this application. It may be understood that in a process in which the tablet computer 10 performs target tracking, when performing feature extraction on the input image corresponding to the tracking target and an input image corresponding to a candidate target, the tablet computer 10 always uses a same feature extraction method.

### 4. Determine, in an (N+1)^{th} frame of image, whether the candidate target is the tracking target.

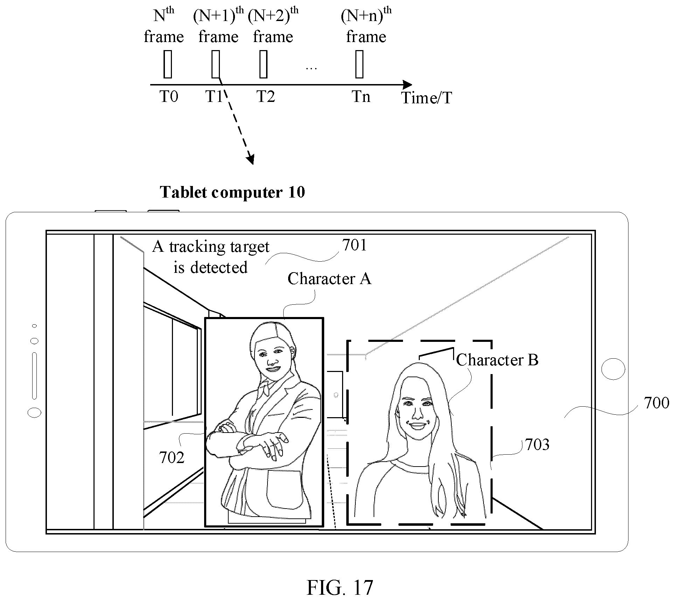

FIG. 17 shows an example of a user interface 700 of the tablet computer 10. The (N+1)^{th} frame of image may be displayed in the user interface 700. The user interface 700 may include a candidate target character A and a candidate target character B. The user interface 700 may include prompt text 701, an indication box 702, and a detection box 703. The prompt text 701 is used to prompt that the tracking target is detected in the (N+1)^{th} frame of image. The indication box 702 is used to indicate that a circled object (for example, the character A) is the tracking target. The detection box 703 is used to circle the character B, that is, it indicates that the tablet computer 10 detects the character B in the user interface 700.

After detecting the candidate target (the character A and the character B) in the (N+1)^{th} frame of image, the tablet computer 10 performs feature extraction on the candidate target. The tablet computer 10 performs feature matching between each of a feature of the candidate target character A and a feature of the candidate target character B and the feature of the tracking target. The tablet computer 10 determines that the feature of the target character A matches the feature of the tracking target. The tablet computer 10 displays the prompt text 701 and the indication box 702 in the user interface.

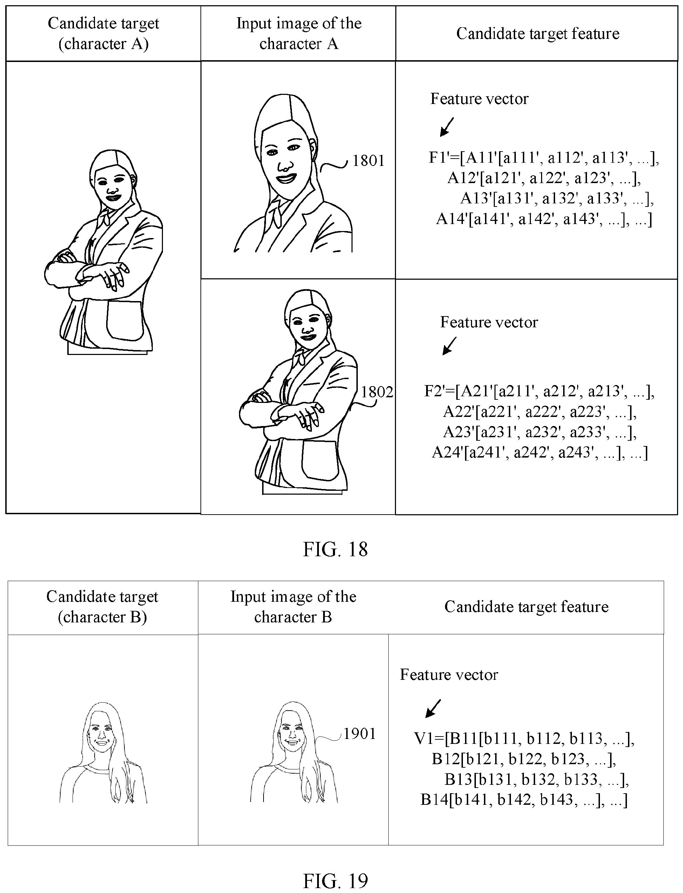

FIG. 18 shows an example of an input image for feature extraction corresponding to the candidate target character A and a feature corresponding to the input image. The candidate target character A may be divided, based on a key point, into two input images used for feature extraction. That is, the candidate target character A may be divided into an input image 1801 and an input image 1802 based on the key point. Specifically, a body part (namely, a body part above a shoulder of the tracking target) that includes a key point A1 to a key point A4 in the candidate target character A may be divided into one image (namely, the input image 1801) used for feature extraction, and a body part (namely, a body part above a hip of the tracking target) that includes a key point A1 to a key point A10 in the candidate target character A may be divided into one image (namely, the input image 1802) used for feature extraction.

The tablet computer 10 performs feature extraction on the input image 1801, to obtain a feature of the input image 1801. For example, the feature of the input image 1801 may be represented by a feature vector F1'. The feature vector F1' may represent one or more of features such as a color feature, a texture feature, and a transformation feature of the input image 1801. This is not limited herein. The tablet computer 10 performs feature extraction on the input image 1802, to obtain a feature of the input image 1802. The feature of the input image 1802 may be represented by a feature vector F2'. The feature vector F2' may represent one or more of features such as a color feature, a texture feature, and a transformation feature of the input image 1801. This is not limited herein.

FIG. 19 shows an example of an input image for feature extraction corresponding to the candidate target character B and a feature corresponding to the input image. The candidate target character B may be divided, based on a key point, into one input image used for feature extraction. That is, the candidate target character B may be divided into an input image 1901 based on the key point. Specifically, a body part (namely, a body part above a shoulder of the tracking target) that includes a key point A1 to a key point A4 in the candidate target character B may be divided into one image (namely, the input image 1901) used for feature extraction.

The tablet computer 10 performs feature extraction on the input image 1901, to obtain a feature of the input image 1901. For example, the feature of the input image 1901 may be represented by a feature vector V1. The feature vector V1 may represent one or more of features such as a color feature, a texture feature, and a transformation feature of the input image 1901. This is not limited herein.

In this way, the tablet computer 10 may match a feature of the candidate target that includes only the body part above the hip and a feature of the tracking target that includes only the body part above the hip. When the tracking target and the candidate target are a same character, the tablet computer 10 may determine that the candidate target in the next frame of image is the tracking target specified by the user in the current frame of image. In this way, when the tracking target and the candidate target are a same character, but inconsistent body parts of the character appear, or some body parts of the candidate target are blocked, the tablet computer 10 may also accurately determine that the candidate target is the tracking target specified by the user.

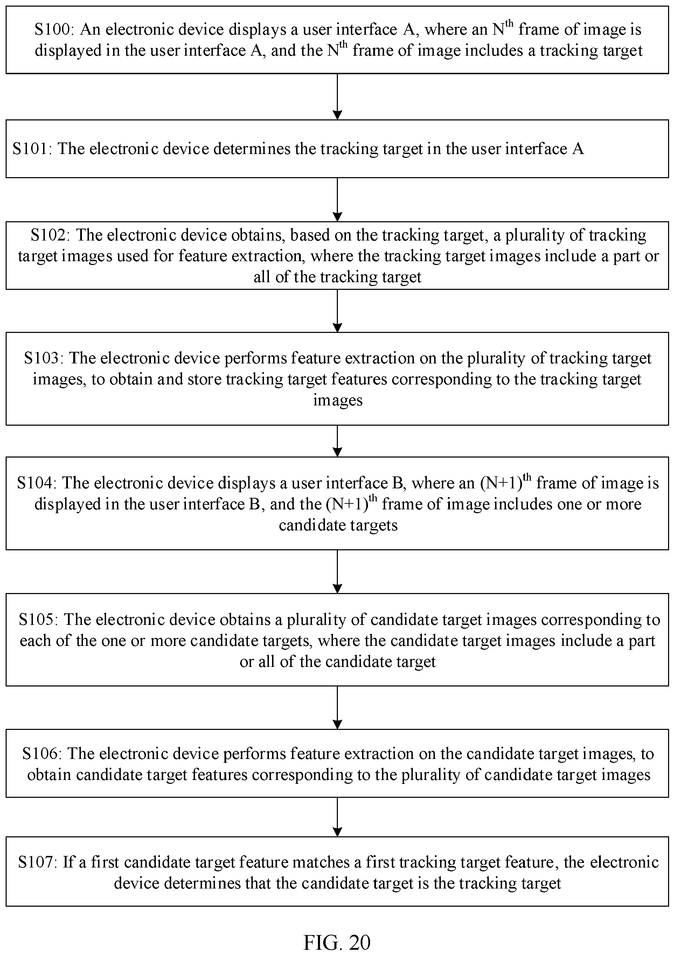

An application scenario of the target tracking method provided in the embodiments of this application is described based on the foregoing content with reference to the UI. A target tracking method provided in an embodiment of this application is described below in detail with reference to the accompanying drawings. As shown in FIG. 20, the method may include the following steps.

S100: An electronic device displays a user interface A, where an N^{th} frame of image is displayed in the user interface A, and the N^{th} frame of image includes a tracking target.

The electronic device is a device that can display a user interface and that has a target tracking function, for example, the tablet computer 10 shown in FIG. 1. The electronic device may alternatively be a smartphone, a television, or the like. This is not limited herein.

The electronic device may display the user interface A. The user interface A is used to display the N^{th} frame of image. The N^{th} frame of image includes the tracking target. The N^{th} frame of image is an image collected by a camera of the electronic device, an image captured by a video surveillance device, or a frame of video in a video frame. For example, the user interface A may be the user interface 400 shown in FIG. 8. A character A in the user interface 400 may be the tracking target. In this embodiment of this application, the user interface A may be referred to as a first user interface.

It may be understood that before the electronic device displays the user interface A, the electronic device enables the target tracking function. There may be a plurality of manners in which the electronic device enables the target tracking function. For example, a user may tap, in a user interface (for example, the user interface 300 shown in FIG. 5A) of a specific application (for example, the video surveillance application shown in FIG. 1) in the electronic device, a control (for example, the control 302 shown in FIG. 5A) used to enable the target tracking function; and the electronic device enables the target tracking function in response to the user operation. Herein, refer to the process in which the tablet computer 10 enables target tracking shown in FIG. 1 to FIG. 7. For another example, a user may enter, to the electronic device, a voice instruction (for example, "please enable the target tracking function") used to enable the target tracking function; and the electronic device enables the target tracking function in response to the voice indication from the user. A manner in which the electronic device enables the target tracking function is not limited in this embodiment of this application.

S101: The electronic device determines the tracking target in the user interface A.

There may be a plurality of manners in which the electronic device may determine the tracking target in the user interface A.

For example, in a possible implementation, the electronic device may detect a plurality of objects (for example, a character, a plant, and a vehicle) in the N^{th} frame of image; the electronic device may display a detection box to circle the object detected by the electronic device; and the user may tap the object circled in the detection box, and in response to the user operation, the electronic device may use an image part circled in the detection box as the tracking target. Herein, refer to the process in which the electronic device determines the tracking target described in FIG. 8 to FIG. 10. For example, the character A circled in the detection box 402 shown in FIG. 9 is the tracking target. The electronic device may capture an image part circled in the detection box 402 from the N^{th} frame of image, and use the image part as an image corresponding to the tracking target (character A).

It may be understood that the electronic device may detect a character in a frame of image that includes the character and a background. Specifically, the electronic device may detect an object (for example, a character, a plant, or a vehicle) in the image by using a target detection model. An input to the target detection model may be an image. For example, an image that includes the character A and a character B is shown in the user interface 300 in FIG. 7. An output of the target detection model may be an image in which an object in the image is marked. For example, an image that includes the character A circled by using the detection box 402 and the character B circled by using a detection box 403 is shown in the user interface 400 in FIG. 8. For how the electronic device detects the object in the image, refer to the conventional technology. Details are not described herein.

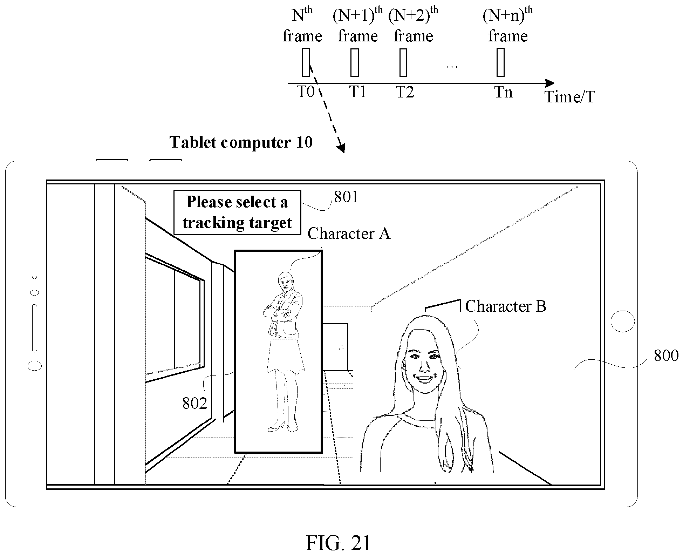

Optionally, the user may draw, in the user interface, an indication box used to select the tracking target, and in response to the user operation, the electronic device determines that an object in the indication box is the tracking target. For example, as shown in FIG. 21, the user may draw an indication box 802 in the user interface 800. An object in the indication box 802 is the tracking target. An image part circled in the indication box 802 is the image corresponding to the tracking target. The indication box herein may be a rectangular box, a square box, a diamond box, or the like. A shape of the indication box is not limited herein.

It may be understood that a manner in which the electronic device determines the tracking target is not limited in this embodiment of this application.

S102: The electronic device obtains, based on the tracking target, a plurality of tracking target images used for feature extraction, where the plurality of tracking target images include a part or all of the tracking target.

The electronic device may divide the image corresponding to the tracking target into a plurality of tracking target images used for feature extraction, and the plurality of tracking target images may include a part or all of the tracking target. In this way, the electronic device may obtain tracking target images that are in a plurality of dimensions, that correspond to the tracking target, and that are used for feature extraction.

In a possible implementation, the electronic device may divide the image corresponding to the tracking target into a plurality of tracking target images based on a key point. For example, the tracking target is a character. As shown in FIG. 15, the electronic device may detect a total of 14 human body key points, namely, a key point A1 to a key point A14; and then the electronic device divides, based on the key point of the tracking target, the image corresponding to the tracking target into a plurality of tracking target images used for feature extraction.

Specifically, as shown in FIG. 16, the electronic device may divide the image corresponding to the tracking target into an input image (for example, an input image 1601) that includes only a body part of the key point A1 to a key point A4 of the tracking target, an input image (for example, an input image 1602) that includes only a body part of the key point A1 to a key point A10 of the tracking target, an input image (for example, an input image 1603) that includes only a body part of the key point A1 to a key point A12 of the tracking target, and an input image (for example, an input image 1604) that includes a body part of the key point A1 to the key point A14 of the tracking target. Herein, refer to the foregoing description in FIG. 16. Details are not described herein. In this way, when the tracking target in a next frame of image appears only with a body part above a shoulder, only with a body part above a hip, or only with a body part above a knee, the electronic device may also accurately determine the tracking target.

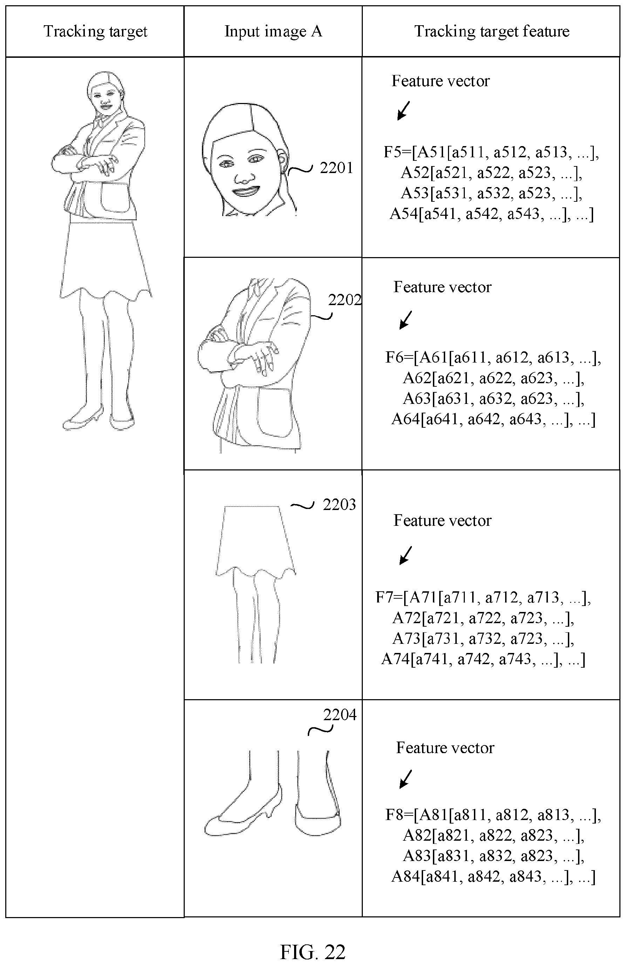

Optionally, as shown in FIG. 22, the electronic device may divide the image corresponding to the tracking target into an input image (for example, an input image 2201) that includes only a body part of the key point A1 and a key point A2 of the tracking target, an input image (for example, an input image 2202) that includes only a body part of a key point A3 to a key point A8 of the tracking target, an input image (for example, an input image 2203) that includes only a body part of a key point A9 to a key point A12 of the tracking target, and an input image (for example, an input image 2204) that includes a body part of a key point A13 and the key point A14 of the tracking target. The input image 2201, the input image 2202, the input image 2203, and the input image 2204 are merely a part of the tracking target. That is, the input image 2201 includes only a head of the tracking target, the input image 2202 includes only an upper body part (namely, a body part that is between the shoulder and the hip and that does not include the hip) of the tracking target, the input image 2203 includes only a lower body part (namely, a body part that is between the hip and the foot and that does not include the foot) of the tracking target, and the input image 2204 includes only the foot of the tracking target. There is no same body part between any two of the input images 2201, 2202, 2203, and 2204. For example, there is no same body part between the input image 2201 and the input image 2202, and there is no same body part between the input image 2201 and the input image 2203.

Optionally, the electronic device may divide the image corresponding to the tracking target into an input image (for example, an input image 1601) that includes only a body part of the key point A1 to a key point A4 of the tracking target, an input image (for example, an input image 1602) that includes only a body part of the key point A1 to a key point A10 of the tracking target, an input image (for example, an input image 1603) that includes only a body part of the key point A1 to a key point A12 of the tracking target, an input image (for example, an input image 1604) that includes a body part of the key point A1 to the key point A14 of the tracking target, an input image (for example, an input image 2201) that includes only a body part of the key point A1 and a key point A2 of the tracking target, an input image (for example, an input image 2202) that includes only a body part of a key point A3 to a key point A8 of the tracking target, an input image (for example, an input image 2203) that includes only a body part of a key point A9 to a key point A12 of the tracking target; and an input image (for example, an input image 2204) that includes a body part of a key point A13 and the key point A14 of the tracking target. For example, the electronic device may divide the tracking target shown in FIG. 16 into the input image 1601, the input image 1602, the input image 1603, and the input image 1604 shown in FIG. 16, and the input image 2201, the input image 2202, the input image 2203, and the input image 2204 shown in FIG. 22. Herein, all of the input image 1601, the input image 1602, the input image 1603, and the input image 1604 shown in FIG. 16, and the input image 2201, the input image 2202, the input image 2203, and the input image 2204 shown in FIG. 22 may be referred to as tracking target images in this embodiment of this application.

It may be understood that the electronic device may divide, based on the key point, the image corresponding to the tracking target into more or fewer tracking target images than those shown in FIG. 16 or FIG. 22. In this embodiment of this application, the electronic device may divide the tracking target into a plurality of tracking target images based on the key point. In this embodiment of this application, a key point of the tracking target specifically included in the tracking target image obtained through division and a specific quantity of tracking target images are not limited.

It may be understood that the electronic device may detect the human body key point (for example, a bone point). The electronic device may recognize, by using a human body key point recognition algorithm, a key point of a character in an image frame displayed on the electronic device. Herein, the recognizing a key point may mean determining location information of the key point. The location information of the recognized key point may be used to obtain the tracking target image through division from the image corresponding to the tracking target. An input to the human body key point recognition algorithm may be a human body image. An output of the human body key point recognition algorithm may be location information (for example, two-dimensional coordinates) of a human body key point. The electronic device may recognize the key points A1 to A14 shown in FIG. 15. The key point A1 to the key point A14 may respectively correspond to basic human body bone points, for example, a head bone point, a neck bone point, a left shoulder bone point, a right shoulder bone point, a left elbow bone point, a right elbow bone point, a left hand bone point, a right hand bone point, a left hip bone point, a right hip bone point, a left knee bone point, a right knee bone point, a left foot bone point, and a right foot bone point. Herein, refer to the foregoing description in FIG. 15. Details are not described herein. FIG. 15 constitutes no limitation. The electronic device may recognize more or fewer human body key points. This is not limited in this embodiment of this application.

S103: The electronic device performs feature extraction on the plurality of tracking target images, to obtain and store tracking target features corresponding to the plurality of tracking target images.

Specifically, the electronic device may perform feature extraction on the plurality of tracking target images by using a feature extraction algorithm, to obtain and store the features (for example, one or more of features such as a color feature, a texture feature, and a transformation feature) of the plurality of tracking target images. A feature vector obtained by the electronic device by performing feature extraction on the tracking target image is the tracking target feature corresponding to the tracking target image. The electronic device may store the tracking target feature corresponding to the tracking target image. It may be understood that one tracking target image may correspond to one tracking target feature. If there are a plurality of tracking target images, the electronic device may obtain and store a plurality of tracking target features.

An input to the feature extraction algorithm may be a tracking target image. An output of the feature extraction algorithm may be a feature vector of the tracking target image. It may be understood that different input images correspond to a same quantity of dimensions of feature vectors, but values in the feature vectors are different.

As shown in FIG. 16, the tracking target may be divided into the input image 1601, the input image 1602, the input image 1603, and the input image 1604. The input image 1601 may include the key points A1 to A4. A feature corresponding to the input image 1601 may be one or more of features such as a color feature, a texture feature, and a transformation feature of the input image 1601. For example, a feature vector F1 shown in FIG. 16 may represent one or more of features such as the color feature, the texture feature, and the transformation feature of the input image 1601. This is not limited herein. A specific form of the feature vector F1 is not limited in this embodiment of this application.

A feature corresponding to the input image 1602 may be one or more of features such as a color feature, a texture feature, and a transformation feature of the input image 1602. For example, a feature vector F2 shown in FIG. 16 may represent one or more of features such as the color feature, the texture feature, and the transformation feature of the input image 1602. This is not limited herein. A feature corresponding to the input image 1603 may be one or more of features such as a color feature, a texture feature, and a transformation feature of the input image 1603. This is not limited herein. For example, a feature vector F3 shown in FIG. 16 may represent one or more of features such as the color feature, the texture feature, and the transformation feature of the input image 1603. This is not limited herein. A feature corresponding to the input image 1604 may be one or more of features such as a color feature, a texture feature, and a transformation feature of the input image 1604. This is not limited herein. For example, a feature vector F4 shown in FIG. 16 may represent one or more of features such as the color feature, the texture feature, and the transformation feature of the input image 1604. This is not limited herein. The electronic device performs feature extraction on the input image 1601, the input image 1602, the input image 1603, and the input image 1604, and stores the features. A manner in which the electronic device stores the feature corresponding to the input image may be shown in FIG. 16. The electronic device may store, by using a table, the tracking target, the input image obtained by dividing the tracking target, and the feature corresponding to the input image. In FIG. 16, a mapping relationship is established between the tracking target and each of the feature vector F1, the feature vector F2, the feature vector F3, and the feature vector F4. In other words, each of the feature vector F1, the feature vector F2, the feature vector F3, and the feature vector F4 may represent the tracking target.

As shown in FIG. 22, the tracking target may be divided into the input image 2201, the input image 2202, the input image 2203, and the input image 2204. The input image 2201 may include the key points A1 and A2. A feature corresponding to the input image 2201 may be one or more of features such as a color feature, a texture feature, and a transformation feature of the input image 2201. For example, a feature vector F5 shown in FIG. 22 may represent one or more of features such as the color feature, the texture feature, and the transformation feature of the input image 2201. This is not limited herein. A feature corresponding to the input image 2202 may be one or more of features such as a color feature, a texture feature, and a transformation feature of the input image 2202. For example, a feature vector F6 shown in FIG. 22 may represent one or more of features such as the color feature, the texture feature, and the transformation feature of the input image 2202. This is not limited herein. Herein, for the feature vector F6, refer to the description of the feature vector F1 in the foregoing content. It may be understood that the feature vector F6 corresponding to the input image 2202 herein is merely an example. A specific form of the feature vector F6 is not limited in this embodiment of this application.

A feature corresponding to the input image 2203 may be one or more of features such as a color feature, a texture feature, and a transformation feature of the input image 2203. This is not limited herein. For example, a feature vector F7 shown in FIG. 22 may represent one or more of features such as the color feature, the texture feature, and the transformation feature of the input image 2203. This is not limited herein. It may be understood that the feature vector F7 corresponding to the input image 2203 herein is merely an example. A specific form of the feature vector F7 is not limited in this embodiment of this application.

A feature corresponding to the input image 2204 may be one or more of features such as a color feature, a texture feature, and a transformation feature of the input image 2204. This is not limited herein. For example, a feature vector F8 shown in FIG. 22 may represent one or more of features such as the color feature, the texture feature, and the transformation feature of the input image 2204. This is not limited herein. Herein, for the feature vector F8, refer to the description of the feature vector F1 in the foregoing content. It may be understood that the feature vector F8 corresponding to the input image 2204 herein is merely an example. A specific form of the feature vector F8 is not limited in this embodiment of this application.

The electronic device performs feature extraction on the input image 2201, the input image 2202, the input image 2203, and the input image 2204, and stores the features. The electronic device may store the tracking target, the input image obtained by dividing the tracking target, and the feature corresponding to the input image. In FIG. 22, a mapping relationship is established between the tracking target and each of the feature vector F5, the feature vector F6, the feature vector F7, and the feature vector F8. In other words, each of the feature vector F5, the feature vector F6, the feature vector F7, and the feature vector F8 may represent the tracking target.

In a possible implementation, for the tracking target (character A) determined by the electronic device shown in FIG. 10, the electronic device performs feature extraction, and the obtained and stored features may be the feature vector F1, the feature vector F2, the feature vector F3, and the feature vector F4. In other words, the electronic device divides the tracking target into the input image 1601, the input image 1602, the input image 1603, and the input image 1604. The electronic device performs feature extraction on the input image 1601, the input image 1602, the input image 1603, and the input image 1604, to obtain the feature vector F1, the feature vector F2, the feature vector F3, and the feature vector F4. The electronic device may store the feature vector F1, the feature vector F2, the feature vector F3, and the feature vector F4.

Optionally, for the tracking target (character A) determined by the electronic device shown in FIG. 10, the electronic device performs feature extraction, and the obtained and stored features may be the feature vector F5, the feature vector F6, the feature vector F7, and the feature vector F8. In other words, the electronic device divides the tracking target into the input image 2201, the input image 2202, the input image 2203, and the input image 2204. The electronic device performs feature extraction on the input image 2201, the input image 2202, the input image 2203, and the input image 2204, to obtain the feature vector F5, the feature vector F6, the feature vector F7, and the feature vector F8. The electronic device may store the feature vector F5, the feature vector F6, the feature vector F7, and the feature vector F8.

Optionally, for the tracking target (character A) determined by the electronic device shown in FIG. 10, the electronic device performs feature extraction, and the obtained and stored features may be the feature vector F1, the feature vector F2, the feature vector F3, the feature vector F4, the feature vector F5, the feature vector F6, the feature vector F7, and the feature vector F8. In other words, the electronic device divides the tracking target into the input image 1601, the input image 1602, the input image 1603, the input image 1604, the input image 2201, the input image 2202, the input image 2203, and the input image 2204. The electronic device performs feature extraction on the input image 1601, the input image 1602, the input image 1603, the input image 1604, the input image 2201, the input image 2202, the input image 2203, and the input image 2204, to obtain the feature vector F1, the feature vector F2, the feature vector F3, the feature vector F4, the feature vector F5, the feature vector F6, the feature vector F7, and the feature vector F8. The electronic device may store the feature vector F1, the feature vector F2, the feature vector F3, the feature vector F4, the feature vector F5, the feature vector F6, the feature vector F7, and the feature vector F8.

It may be understood that all of the feature vector F1, the feature vector F2, the feature vector F3, the feature vector F4, the feature vector F5, the feature vector F6, the feature vector F7, and the feature vector F8 may be referred to as tracking target features in this embodiment of this application. A quantity of tracking target features that can be extracted by the electronic device is not limited in this embodiment of this application.

It may be understood that for different tracking targets, quantities of tracking target features extracted by the electronic device may be different.

It may be understood that there may be a plurality of tracking targets in this embodiment of this application. When there are a plurality of tracking targets, the electronic device may divide each tracking target based on steps S102 and S103, to obtain a tracking target image, and perform feature extraction on the tracking target image, to obtain and store a tracking target feature. The electronic device may store tracking target images corresponding to the plurality of tracking targets and tracking target features corresponding to the tracking target images.

S104: The electronic device displays a user interface B, where an (N+1)^{th} frame of image is displayed in the user interface B, and the (N+1)^{th} frame of image includes one or more candidate targets.

The electronic device may display the user interface B, and the user interface B may be the user interface 700 shown in FIG. 17. The (N+1)^{th} frame of image is displayed in the user interface B. The (N+1)^{th} frame of image is a next frame of image of the N^{th} frame of image. The (N+1)^{th} frame of image may include one or more candidate targets. As shown in the figure, both the character A and the character B shown in the user interface 700 are candidate targets. In this embodiment of this application, the user interface B may be referred to as a second user interface.

In a possible implementation, if the electronic device detects no candidate target in the (N+1)^{th} frame of image, the electronic device may display an (N+2)^{th} frame of image. Then, step S104 to step S107 are performed on the (N+2)^{th} frame of image.

It may be understood that the electronic device detects no candidate target in the (N+1)^{th} frame of image, and the candidate target appears in the (N+1)^{th} frame of image, but the electronic device does not detect the candidate target. Alternatively, no candidate target may appear in the (N+1)^{th} frame of image. For example, the candidate target does not appear in a photographing range of the camera of the electronic device, and there is no candidate target in the (N+1)^{th} frame of image displayed by the electronic device herein. In this case, the electronic device may display the (N+2)^{th} frame of image. Then, step S104 to step S107 are performed on the (N+2)^{th} frame of image.

S105: The electronic device obtains a plurality of candidate target images corresponding to each of the one or more candidate targets, where the plurality of candidate target images include a part or all of the candidate target.

The electronic device detects that there is one or more candidate targets in the (N+1)^{th} frame of image. Then, the electronic device may divide each of the one or more candidate targets into candidate target images used for feature extraction. The candidate target images corresponding to each candidate target include a part or all of the candidate target. For example, the (N+1)^{th} frame of image is displayed in the user interface 700 shown in FIG. 17. The (N+1)^{th} frame of image includes a candidate target character A and a candidate target character B.

As shown in FIG. 18, the candidate target character A may be divided into an input image 1801 and an input image 1802. As shown in FIG. 19, the candidate target character B may be divided into an input image 1901. Herein, all of the input image 1801, the input image 1802, and the input image 1901 may be referred to as candidate target images in this embodiment of this application.

It may be understood that a manner of dividing the candidate target into the plurality of candidate target images is consistent with the manner of dividing the tracking target into the plurality of tracking target images. That is, if the tracking target is divided into the input image that includes only the body part of the key point A1 to the key point A4 of the tracking target, the input image that includes only the body part of the key point A1 to the key point A10 of the tracking target, the input image that includes only the body part of the key point A1 to the key point A12 of the tracking target, and the input image that includes the body part of the key point A1 to the key point A14 of the tracking target, and if the candidate target is a whole body image that includes a key point A1 to a key point 14, the candidate target also needs to be divided into an input image that includes only a body part of the key point A1 to a key point A4 of the tracking target, an input image that includes only a body part of the key point A1 to a key point A10 of the tracking target, an input image that includes only a body part of the key point A1 to a key point A12 of the tracking target, and an input image that includes a body part of the key point A1 to the key point A14 of the tracking target; or if the candidate target is a half body image (for example, the character A shown in the user interface 700) that includes a key point A1 to a key point 10, the candidate target is divided into an input image that includes only a body part of the key point A1 to a key point A4 of the tracking target and an input image that includes only a body part of the key point A1 to a key point A10 of the tracking target.

S106: The electronic device performs feature extraction on the plurality of candidate target images, to obtain candidate target features corresponding to the plurality of candidate target images.

Specifically, the electronic device may perform feature extraction on the plurality of candidate target images by using a feature extraction algorithm, to obtain the plurality of candidate target image features (for example, one or more of features such as a color feature, a texture feature, and a transformation feature). A feature vector obtained by the electronic device by performing feature extraction on the candidate target image is the candidate target feature corresponding to the candidate target image. Herein, refer to the description of performing feature extraction on the tracking target image in the foregoing steps. Details are not described herein.

As shown in FIG. 18, the candidate target character A may be divided into the input image 1801 and the input image 1802. The input image 1801 may include the key points A1 to A4. A feature corresponding to the input image 1801 may be one or more of features such as a color feature, a texture feature, and a transformation feature of the input image 1801. For example, a feature vector F1' shown in FIG. 18 represents one or more of features such as the color feature, the texture feature, and the transformation feature of the input image 1801. This is not limited herein. The feature vector F1' corresponding to the input image 1801 herein is merely an example. A specific form of the feature vector F1' is not limited in this embodiment of this application.

A feature corresponding to the input image 1802 may be one or more of features such as a color feature, a texture feature, and a transformation feature of the input image 1802. For example, a feature vector F2' shown in FIG. 18 may represent one or more of features such as the color feature, the texture feature, and the transformation feature of the input image 1802. This is not limited herein. Herein, for the feature vector F2', refer to the description of the feature vector F1 in the foregoing content. It may be understood that the feature vector F2' corresponding to the input image 1802 herein is merely an example. A specific form of the feature vector F2' is not limited in this embodiment of this application.

As shown in FIG. 19, the candidate target character A may be divided into the input image 1901. The input image 1901 may include the human body key points A1 to A4. A feature corresponding to the input image 1901 may be one or more of features such as a color feature, a texture feature, and a transformation feature of the input image 1901. For example, a feature vector V1 shown in FIG. 19 may represent one or more of features such as the color feature, the texture feature, and the transformation feature of the input image 1901. This is not limited herein. The feature vector V1 corresponding to the input image 1901 herein is merely an example. A specific form of the feature vector V1 is not limited in this embodiment of this application.

Optionally, the electronic device may perform feature extraction only on a candidate target image that includes a larger quantity of key points. For example, for the input image 1801 and the input image 1802 shown in FIG. 18, the input image 1802 includes a larger quantity of key points, and therefore the electronic device may perform feature extraction only on the input image 1802. In this way, efficiency of the electronic device can be improved.

S107: The electronic device performs feature matching between a first candidate target feature and a first tracking target feature, and if the first candidate target feature matches the first tracking target feature, the electronic device determines that the candidate target is the tracking target.

The electronic device may perform feature matching between the first candidate target feature and the first tracking target feature. The electronic device may perform feature matching between the first tracking target feature and the first candidate target feature, in the candidate target features, that corresponds to a first candidate target image that includes a largest quantity of human body key points. The plurality of candidate target images include the first candidate target image. The plurality of tracking target images include a first tracking target image. The first tracking target feature is obtained by the electronic device from the first tracking target image. For example, for the candidate target character A shown in FIG. 18, the electronic device may perform feature matching between the feature vector F2' corresponding to the candidate target image, namely, the input image 1802, that is of the candidate target character A and that includes a larger quantity of key points and a tracking target feature (namely, the feature vector F2) corresponding to a candidate target image (namely, the input image 1602) that includes a same plurality of key points in the tracking target. Herein, the input image 1802 is the first candidate target image, the feature vector F2' is the first candidate target feature, the input image 1602 is the first tracking target image, and the feature vector F2 is the first tracking target feature.

In a possible implementation, the electronic device may calculate a Euclidean distance D1 between the feature vector F2' and the feature vector F2. If the Euclidean distance D1 between the feature vector F2' and the feature vector F2 is less than a preset Euclidean distance D, the electronic device determines that the feature vector F2' matches the feature vector F2. Further, the electronic device determines that the candidate target character A is the tracking target. It may be understood that the preset Euclidean distance D may be configured by a system of the electronic device.

In a possible implementation, the plurality of tracking target images include the first tracking target image and a second tracking target image, the plurality of tracking target images are obtained from the tracking target, the plurality of candidate target images include the first candidate target image and a second candidate target image, the plurality of candidate target images are obtained from a first candidate target, a quantity of key points of the tracking target included in the first tracking target image is the same as a quantity of key points of the first candidate target included in the first candidate target image, a quantity of key points of the tracking target included in the second tracking target image is the same as a quantity of key points of the first candidate target included in the second candidate target image, the quantity of key points of the tracking target included in the first tracking target image is greater than the quantity of key points of the tracking target included in the second tracking target image, the first tracking target feature is extracted from the first tracking target image, and the first candidate target feature is extracted from the first candidate target image.

In a possible implementation, the electronic device selects, for feature matching from the tracking target features of the tracking target and the candidate target features of the candidate target, the first candidate target feature and the first tracking target feature that include a same quantity of key points and that include a largest quantity of key points. Herein, the first candidate target feature that includes a largest quantity of key points means that the first candidate target image corresponding to the first candidate target is a candidate target image that includes a largest quantity of key points in the plurality of candidate target images. The first tracking target feature that includes a largest quantity of key points means that the first tracking target image corresponding to a first tracking target is a tracking target image that includes a largest quantity of key points in the plurality of tracking target images. Herein, the first candidate target image corresponding to the first candidate target feature means that the electronic device extracts the first candidate target feature from the first candidate target image. The first tracking target image corresponding to the first tracking target feature means that the electronic device may extract the first tracking target feature from the first tracking target image. For example, if the plurality of tracking target features corresponding to the tracking target include the feature vector F1 that includes the key point A1 to the key point A4 of the tracking target, the feature vector F2 that includes feature information of the key point A1 to the key point A10 of the tracking target, the feature vector F3 that includes feature information of the key point A1 to the key point A12 of the tracking target, and the feature vector F4 that includes feature information of the key point A1 to the key point A14 of the tracking target, and the plurality of candidate target features corresponding to the candidate target include the feature vector F1' that includes feature information of the key point A1 to the key point A4 of the candidate target and the feature vector F2' that includes feature information of the key point A1 to the key point A10 of the candidate target, the electronic device may perform feature matching between the feature vector F2' and the feature vector F2 that include a same quantity of key points.

Further, when the candidate target feature and the tracking target feature that include a largest quantity of key points do not match, the electronic device may perform feature matching between a candidate target feature and a tracking target feature that include a smaller quantity of key points and that include a same quantity of key points. For example, if the feature vector F2' does not match the feature vector F2, the electronic device may perform feature matching between the feature vector F1' and the feature vector F1.

Optionally, when the candidate target feature and the tracking target feature that include a largest quantity of key points do not match, the electronic device displays the (N+2)^{th} frame of image. The electronic device performs step S104 to step S107 on the (N+2)^{th} image.

In a possible implementation, when the electronic device determines that the candidate target A in the (N+1)^{th} frame of image is the tracking target selected by the user from the N^{th} frame of image, the electronic device may add a candidate target feature corresponding to the candidate target A in the (N+1)^{th} frame of image to the tracking target features that correspond to the tracking target and that are stored in the electronic device. In other words, the features that correspond to the tracking target and that are stored in the electronic device are changed to the tracking target feature and the candidate target feature. For example, the tracking target features corresponding to the tracking target include only the feature vector F1 and the feature vector F2, and candidate target features corresponding to the candidate target A in the (N+1)^{th} frame include the feature vector F1', the feature vector F2', a feature vector F3' that includes feature information of the key point A1 to the key point A12 of the candidate target A, and a feature vector F4' that includes feature information of the key point A1 to the key point A14 of the candidate target A. In this case, the electronic device may add the feature vector F3' and the feature vector F4' to the stored tracking target features corresponding to the tracking target. Alternatively, when the tracking target is the character A in a standing posture, and the candidate target is the character A squatting or walking, there is a higher possibility that features extracted by the electronic device for a same body part are different when the same character is in different postures. The electronic device may add all of the feature vector F1', the feature vector F2', the feature vector F3', and the feature vector F4' to the stored tracking target features corresponding to the tracking target. In this way, the electronic device may also store features of body parts of the same character in different postures.

Optionally, when the electronic device determines that the candidate target A in the (N+1)^{th} frame of image is the tracking target selected by the user in the N^{th} frame of image, the electronic device may update the tracking target features that correspond to the tracking target and that are stored in the electronic device to the candidate target features corresponding to the candidate target A in the (N+1)^{th} frame of image. For example, the tracking target features corresponding to the tracking target include only the feature vector F1 and the feature vector F2, and the candidate target features corresponding to the candidate target A in the (N+1)^{th} frame include the feature vector F1' and the feature vector F2'. In this case, the electronic device updates the stored feature vector F1 and the stored feature vector F2 corresponding to the tracking target to the feature vector F1' and the feature vector F2'.

Specifically, the electronic device may update, at an interval of a preset quantity of frames, the tracking target feature that corresponds to the tracking target and that is stored in the electronic device. For example, the preset quantity of frames may be 10, that is, the electronic device updates, at an interval of 10 frames, the tracking target feature that corresponds to the tracking target and that is stored in the electronic device. The preset quantity of frames may be configured by the system of the electronic device. A specific value of the preset quantity of frames may be 5, 10, or another value. The value of the preset quantity of frames is not limited in this embodiment of this application.

After the electronic device performs step S107, the electronic device displays the (N+2)^{th} frame of image, and continues to perform step S104 to step S107. The electronic device stops performing step S104 to step S107 until the target tracking function is stopped or disabled.

Optionally, when the electronic device does not detect the tracking target within preset duration, the electronic device may stop or disable the target tracking function. It may be understood that the preset duration may be configured by the system of the electronic device. A specific value of the preset duration is not limited in this embodiment of this application.

In implementation of the target tracking method provided in this embodiment of this application, the electronic device may divide the tracking target determined in the N^{th} frame of image into the plurality of tracking target images used for feature extraction. In this way, the electronic device may perform feature extraction on the plurality of tracking target images, to obtain and store the tracking target features of the tracking target in a plurality of dimensions. Then, the electronic device detects the candidate target in the (N+1)^{th} frame of image, and divides, in the manner of dividing the tracking target into the tracking target images, the candidate target into the plurality of candidate target images used for feature extraction. The electronic device performs feature extraction on the candidate target images, to obtain the candidate target features of the candidate target in a plurality of dimensions. The electronic device may select the tracking target feature and the candidate target feature that include feature information of a same quantity of key points for matching. The electronic device performs matching by using features only of a common body part of the tracking target and the candidate target. In this way, when the tracking target is the character A with a whole body, and the candidate target is the character A with a half body, the electronic device can accurately detect that the candidate target is the tracking target. When the tracking object is blocked, incompletely displayed, or deformed, the electronic device can accurately perform target tracking provided that the tracking target selected by the user and the candidate target include a same part. In this way, accuracy of performing target tracking by the electronic device is improved.

The electronic device may perform target tracking on a specified object (for example, a character), and the tracking target may be deformed. For example, when the tracking target is a character, the character may change from a squatting posture to a sitting posture or a standing posture. In other words, a posture of the tracking target changes in consecutive image frames. Therefore, when a posture of a same character in the N^{th} frame of image and the (N+1)^{th} frame of image changes, the electronic device possibly cannot accurately detect, in the (N+1)^{th} frame of image, the tracking target specified by the user in the N^{th} frame of image. Consequently, target tracking by the electronic device fails.

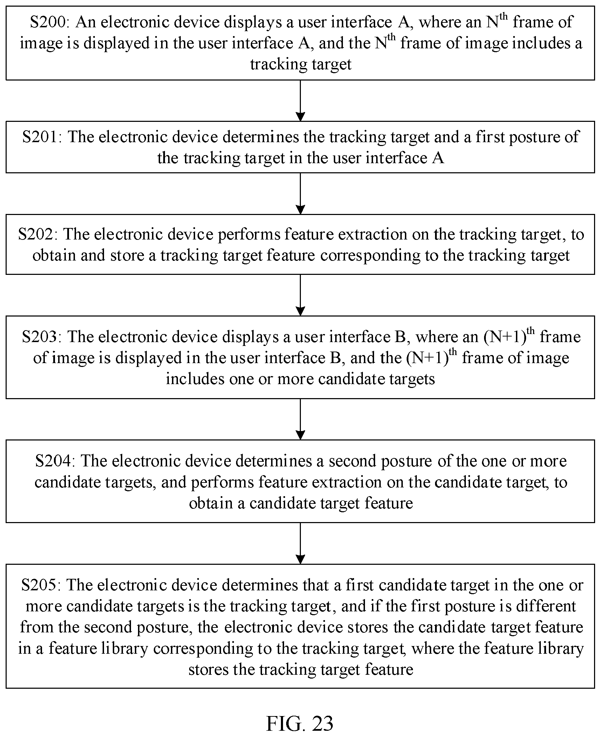

To improve accuracy of performing target tracking by an electronic device when a tracking target is deformed, an embodiment of this application provides a target tracking method. As shown in FIG. 23, the method may specifically include the following steps.

S200: An electronic device displays a user interface A, where an N^{th} frame of image is displayed in the user interface A, and the N^{th} frame of image includes a tracking target.

For step S200, refer to step S100. Details are not described herein.

S201: The electronic device determines the tracking target and a first posture of the tracking target in the user interface A.

For how the electronic device determines the tracking target in the user interface A, refer to the description in step S201. The electronic device may recognize a posture of the tracking target. The first posture may be any one of squatting, sitting, walking, and standing. In this embodiment of this application, the user interface A may be referred to as a first user interface.

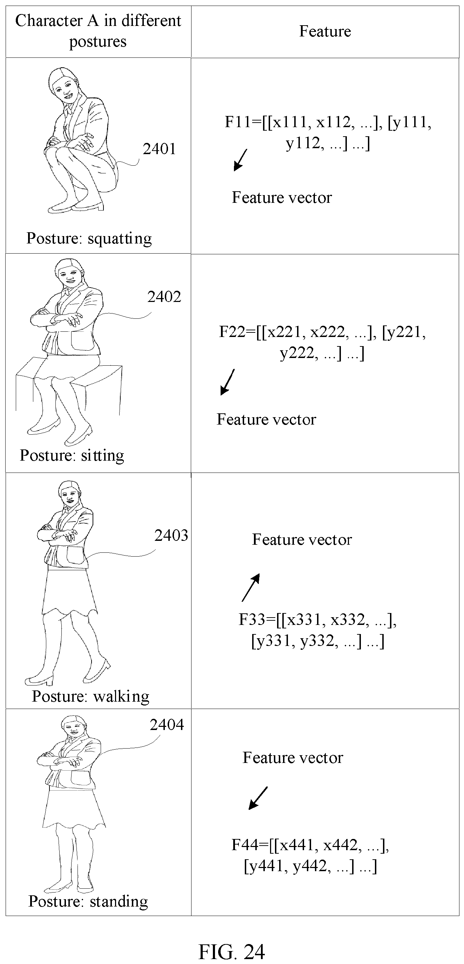

In a possible implementation, the electronic device may recognize a human body posture by using a human body key point and a human body posture recognition technology. An input to the human body posture recognition technology is information about a human body key point (for example, location information of the key point). An output of the human body posture recognition technology is a human body posture, for example, squatting, sitting, walking, or standing. Different postures of a character A correspond to different feature vectors. For example, FIG. 24 shows features respectively corresponding to different postures of the character A. In FIG. 24, an image 2401 is the character A in a squatting posture, a feature vector corresponding to the image 2401 is F 11, and F 11 may include information about each key point of the character A in the squatting posture; an image 2402 is the character A in a sitting posture, a feature vector corresponding to the image 2401 is F22, and F22 may include information about each key point of the character A in the sitting posture; an image 2403 is the character A in a squatting posture, a feature vector corresponding to the image 2403 is F33, and F33 may include information about each key point of the character A in the walking posture; and an image 2404 is the character A in a standing posture, a feature vector corresponding to the image 2404 is F44, and F44 may include information about each key point of the character A in the standing posture.

It may be understood that the human body posture may not be limited to squatting, sitting, walking, and standing shown in FIG. 24. The human body posture may further include half squatting, running, jumping, and the like. This is not limited in this embodiment of this application. The posture recognition technology of the electronic device is not limited to recognizing the human body posture based on the human body key point. A manner of recognizing a posture by the electronic device is not limited in this embodiment of this application.

S202: The electronic device performs feature extraction on the tracking target, to obtain and store a tracking target feature corresponding to the tracking target.

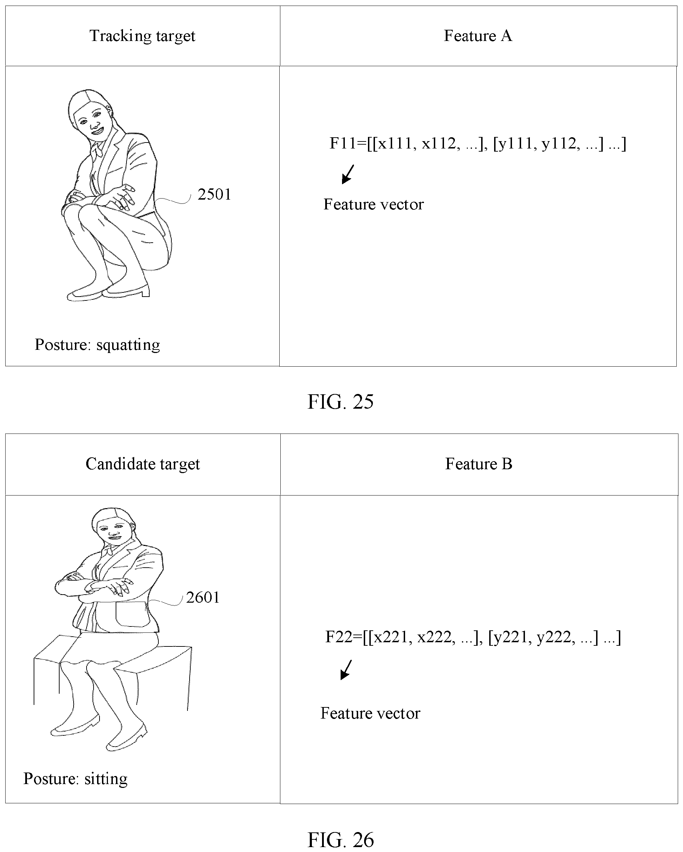

The electronic device may perform feature extraction on the tracking target whose posture is determined, to obtain and store the tracking target feature. As shown in FIG. 25, the tracking target specified by a user in the N^{th} frame of image may be the character A in the squatting posture, namely, an image 2501 shown in FIG. 25. The electronic device performs feature extraction on the tracking target, to obtain a first feature, and stores the tracking target feature. Herein, refer to the foregoing description of performing feature extraction on the tracking target in step S103. Details are not described herein.

S203: The electronic device displays a user interface B, where an (N+1)^{th} frame of image is displayed in the user interface B, and the (N+1)^{th} frame of image includes one or more candidate targets.

For step S203, refer to the description of step S104. Details are not described herein. In this embodiment of this application, the user interface B may be referred to as a second user interface.

S204: The electronic device determines a second posture of the one or more candidate targets, and performs feature extraction on the candidate target, to obtain a candidate target feature.

The electronic device may detect the one or more candidate targets in the (N+1)^{th} frame of image. The electronic device may further determine the second posture of the one or more candidate targets. The second posture may be any one of squatting, sitting, walking, and standing. The electronic device may perform feature extraction on the candidate target in the second posture. For example, as shown in FIG. 26, the candidate target in the (N+1)^{th} frame of image is an image 2601, namely, the character A in the sitting posture. The electronic device performs feature extraction on the character A in the sitting posture, to obtain a candidate target feature, for example, a feature vector F22.

S205: The electronic device determines that a first candidate target in the one or more candidate targets is the tracking target, and if the first posture is different from the second posture, the electronic device stores the candidate target feature in a feature library corresponding to the tracking target, where the feature library stores the tracking target feature.

The (N+1)^{th} frame of image may include one or more candidate targets, and the one or more candidate targets include the first target. The electronic device may determine whether the first candidate target in the (N+1)^{th} frame is the tracking target specified by the user in the N^{th} frame. There may be a plurality of manners in which the electronic device determines that the first candidate target is the tracking target.

In a possible implementation, if the N^{th} frame of image includes only one object, namely, the tracking target, and the (N+1)^{th} frame of image includes only one object, namely, the first candidate target, the electronic device may directly determine that the first candidate target is the tracking target.

In a possible implementation, if the first posture of the tracking target is the same as a second posture of the first candidate target, the electronic device may perform feature matching between the tracking target feature and the candidate target feature. If the candidate target feature matches the tracking target feature, the electronic device determines that the first candidate target is the tracking target.

In a possible implementation, if there are a plurality of candidate targets in the (N+1)^{th} frame of image, the electronic device may obtain a location of the tracking target in the N^{th} frame of image, for example, a center of the tracking target is located at a first location in the N^{th} frame of image; the electronic device may obtain a location of the first candidate target in the (N+1)^{th} frame of image, for example, a center of the first candidate target is located at a second location in the (N+1)^{th} frame of image; and if a preset distance between the first location and the second location is less than a preset distance, the electronic device may determine that the first candidate target is the tracking target. It may be understood that the preset distance may be configured by a system of the electronic device. The preset distance is not specifically limited in this embodiment of this application.

In a possible implementation, if the electronic device stores features of the tracking target in different postures, the electronic device may perform feature matching between a feature vector that corresponds to a posture that is the same as the second posture of the first candidate target in the stored tracking target feature and the candidate target feature, and if the feature vector matches the candidate target feature, the electronic device determines that the first candidate target is the tracking target.

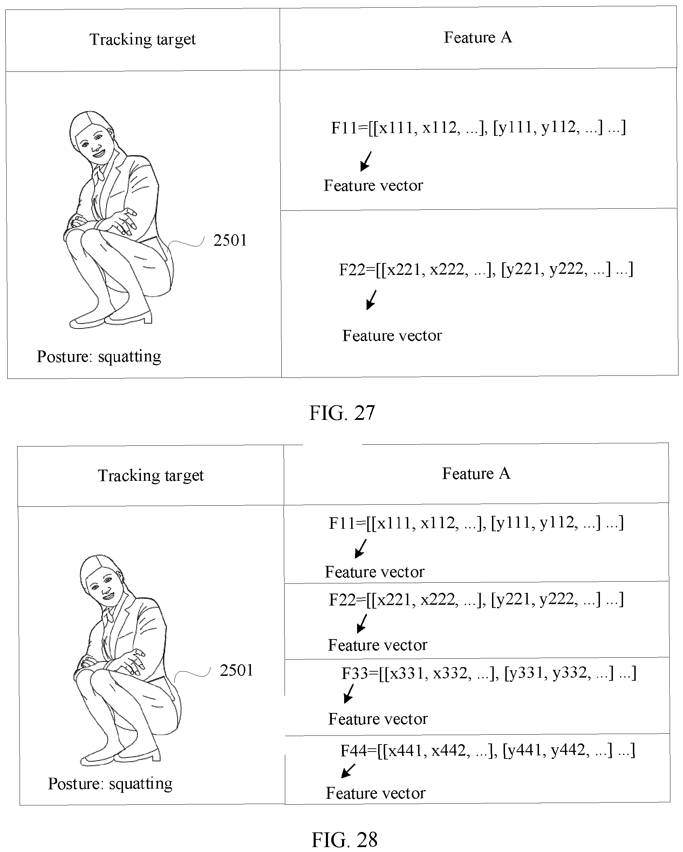

After the electronic device determines that the first candidate target is the tracking target, if the first posture of the tracking target is different from the second posture of the first candidate target, the electronic device may store the candidate target feature in the feature library corresponding to the tracking target. The feature library stores the tracking target feature. As shown in FIG. 25, the tracking target is the character A in the squatting posture. As shown in FIG. 26, the first candidate target is the character A in the sitting posture. After the electronic device determines that the first candidate target is the tracking target, the electronic device may store the candidate target feature corresponding to the first candidate target in the feature library corresponding to the target. For example, as shown in FIG. 27, the electronic device stores the feature vector F22 corresponding to the first candidate target in the feature library corresponding to the tracking target. In other words, the feature corresponding to the tracking target is increased from the feature vector F11 to the feature vector F11 and the feature vector F22.

It may be understood that in a subsequent image frame, for example, an (N+2)^{th} frame of image or an (N+3)^{th} frame of image, the posture of the character A changes to walking or standing. The electronic device may store, in the feature library corresponding to the tracking target, feature vectors corresponding to different postures of the character A. As shown in FIG. 28, a feature vector corresponding to the tracking target is increased from the feature vector F11 to the feature vector F11, the feature vector F22, the feature vector F33, and the feature vector F44.

In implementation of this embodiment of this application, the electronic device may perform target tracking on a specified object (for example, a character), and the tracking target may be deformed. For example, when the tracking target is a character, the character may change from a squatting posture to a sitting posture or a standing posture. In other words, a posture of the tracking target changes in consecutive image frames. The electronic device may store, in the feature library corresponding to the tracking target, features corresponding to different postures of the tracking target. Therefore, when a posture of a same character in the N^{th} frame of image and the (N+1)^{th} frame of image changes, the electronic device may also accurately detect, in the (N+1)^{th} frame of image, the tracking target specified by the user in the N^{th} frame of image. In this way, accuracy of performing target tracking by the electronic device is improved.

An example electronic device 100 provided in an embodiment of this application is described below.

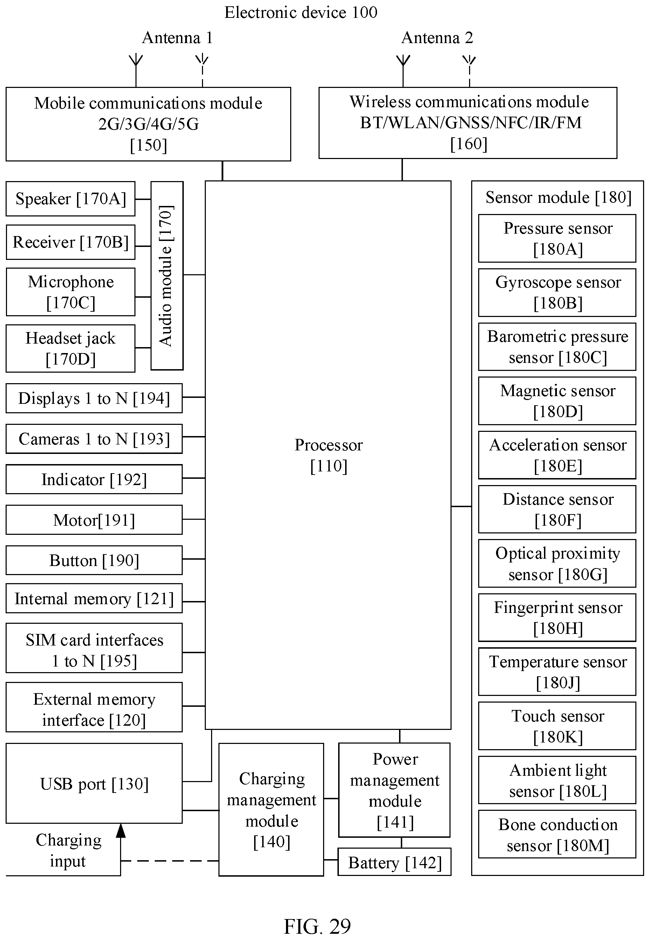

FIG. 29 is a schematic diagram of a structure of an electronic device 100 according to an embodiment of this application.

This embodiment is described below in detail by using the electronic device 100 as an example. It should be understood that the electronic device 100 may include more or fewer components than those shown in the figure, two or more components may be combined, or there may be different component configurations. Components shown in the figure may be implemented by hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. Therefore, repeated access is avoided, and a waiting time of the processor 110 is reduced, and therefore system efficiency is improved.

In this embodiment of this application, the processor 110 may be further configured to: obtain a plurality of candidate target features of a first candidate target; and when a first candidate target feature in the plurality of candidate target features matches a first tracking target feature in a plurality of tracking target features, determine that the first candidate target is a tracking target, where the tracking target is determined by the processor in an M^{th} frame of image, the plurality of tracking target features are features obtained by the processor from the tracking target, and M is less than K.

In this embodiment of this application, the processor 110 may be further configured to: obtain a plurality of tracking target images based on the tracking target, where the tracking target image includes a part or all of the tracking target; and perform feature extraction on the plurality of tracking target images, to obtain the plurality of tracking target features, where a quantity of the plurality of tracking target features is equal to a quantity of the plurality of tracking target images.

In this embodiment of this application, the processor 110 may be further configured to: obtain a plurality of candidate target images based on the first candidate target, where the plurality of candidate target images include a part or all of the first candidate target; and perform feature extraction on the plurality of candidate target images, to obtain the plurality of candidate target features, where a quantity of the plurality of candidate target features is equal to a quantity of the plurality of candidate target features.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication.

The PCM interface may also be configured to perform audio communication, and sample, quantize, and encode an analog signal.

The UART interface is a universal serial data bus, and is used for asynchronous communication.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB port 130 is an interface that conforms to a USB standard specification, and may be specifically a mini USB port, a micro USB port, a USB type-C port, or the like.

It may be understood that an interface connection relationship between the modules shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to be connected to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communications module 160, and the like.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diodes, QLED), or the like. In some embodiments, the electronic device 100 may include one or N displays 194, where N is a positive integer greater than 1.

In this embodiment, the display may be configured to display a first user interface and a second user interface. The display may display an N^{th} frame of image, an (N+1)^{th} frame of image, and the like.

The electronic device 100 may implement a photographing function by using the ISP, the camera 193, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

In this embodiment, the camera 193 may be further configured to obtain the N^{th} frame of image, the (N+1)^{th} frame of image, and the like.

The digital signal processor is configured to process a digital signal, and may process another digital signal in addition to the digital image signal.

The video codec is configured to compress or decompress a digital video.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to be connected to an external storage card, for example, a micro SD card, to extend a storage capability of the electronic device 100. The external storage card communicates with the processor 110 by using the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a facial recognition function, a fingerprint recognition function, and a mobile payment function), and the like. The data storage area may store data (for example, facial information template data and a fingerprint information template) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music play and recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. The headset jack 170D is configured to be connected to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a motion posture of the electronic device 100.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect acceleration of the electronic device 100 in various directions (usually on three axes), and may detect a magnitude and a direction of gravity when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the electronic device 100, and is located at a position different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and touch vibration feedback. For example, touch operations performed on different applications (for example, photographing and audio play) may correspond to different vibration feedback effects. The motor 191 may correspond to different vibration feedback effects for touch operations performed on different areas of the display 194. Different application scenarios (for example, a time reminder, information receiving, an alarm clock, and a game) may correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to come into contact with and be separated from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication.

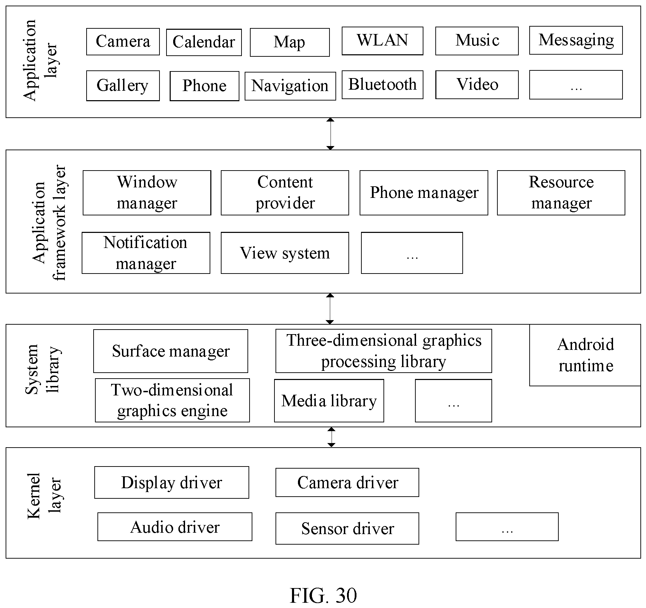

FIG. 30 is a block diagram of a software structure of the electronic device 100 according to an embodiment of this application.

In a layered architecture, software is divided into several layers, and each layer has a clear role and task. The layers communicate with each other through a software interface. In some embodiments, a system is divided into four layers: an application layer, an application framework layer, a runtime (runtime) and system library, and a kernel layer from top to bottom.

The application layer may include a series of application packages.

As shown in FIG. 30, the application packages may include applications (or referred to as applications) such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 30, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, may be configured to convey a notification message, and may automatically disappear after a short pause without requiring user interaction. For example, the notification manager is configured to notify download completion, provide a message notification, and the like. The notification manager may alternatively be a notification that appears in a top status bar of the system in a form of a graph or scroll bar text, for example, a notification of an application running on the background, or may be a notification that appears on a screen in a form of a dialog interface. For example, text information is displayed in the status bar, a prompt tone is made, the electronic device vibrates, or the indicator light flashes.

The runtime (runtime) includes a core library and a virtual machine. The runtime is responsible for scheduling and management of the system.

The core library includes two parts: a performance function that needs to be invoked by a programming language (for example, Jave language), and a system core library.

The application layer and the application framework layer run on the virtual machine. The virtual machine executes programming files (for example, Jave files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to: manage a display subsystem and provide fusion of two-dimensional (2-Dimensional, 2D) and three-dimensional (3-Dimensional, 3D) layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes a working process of software and hardware of the electronic device 100 by using an example with reference to a photographing capture scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of a camera application icon is used. The camera application invokes an interface of the application framework layer to start the camera application, then starts the camera driver by invoking the kernel layer, and captures a static image or a video through the camera 193.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

According to the context, the term "when" used in the foregoing embodiments may be interpreted as a meaning of "if', "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments may be implemented by a computer program by instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A target tracking method, comprising:
displaying, by an electronic device, a first user interface, wherein an M^{th} frame of image is displayed in the first user interface, and the M^{th} frame of image comprises a tracking target;
obtaining, by the electronic device, a plurality of tracking target features of the tracking target;
displaying, by the electronic device, a second user interface, wherein a K^{th} frame of image is displayed in the second user interface, the K^{th} frame of image comprises a first candidate target, and the K^{th} frame of image is an image frame after the M^{th} frame of image;
obtaining, by the electronic device, a plurality of candidate target features of the first candidate target; and
determining, by the electronic device when a first candidate target feature in the plurality of candidate target features matches a first tracking target feature in the plurality of tracking target features, that the first candidate target is the tracking target.

2. The method according to claim 1, wherein the obtaining, by the electronic device, a plurality of tracking target features of the tracking target specifically comprises:
obtaining, by the electronic device, a plurality of tracking target images based on the tracking target, wherein the tracking target image comprises a part or all of the tracking target; and
performing, by the electronic device, feature extraction on the plurality of tracking target images, to obtain the plurality of tracking target features, wherein a quantity of the plurality of tracking target features is equal to a quantity of the plurality of tracking target images.

3. The method according to claim 2, wherein the dividing, by the electronic device, the tracking target into a plurality of tracking target images specifically comprises:
obtaining, by the electronic device, the plurality of tracking target images of the tracking target based on a key point of the tracking target, wherein the tracking target image comprises one or more key points of the tracking target.

4. The method according to claim 3, wherein the plurality of tracking target images comprise a first tracking target image and a second tracking target image; and
the first tracking target image and the second tracking target image comprise a same key point of the tracking target, and a quantity of key points of the tracking target comprised in the second tracking target image is greater than a quantity of key points of the tracking target comprised in the first tracking target image; or
a key point of the tracking target comprised in the first tracking target image is different from a key point of the tracking target comprised in the second tracking target image.

5. The method according to any one of claims 1 to 4, wherein the obtaining, by the electronic device, a plurality of candidate target features of the first candidate target comprises:
obtaining, by the electronic device, a plurality of candidate target images based on the first candidate target, wherein the plurality of candidate target images comprise a part or all of the first candidate target; and
performing, by the electronic device, feature extraction on the plurality of candidate target images, to obtain the plurality of candidate target features, wherein a quantity of the plurality of candidate target features is equal to a quantity of the plurality of candidate target features.

6. The method according to claim 5, wherein the dividing, by the electronic device, the first candidate target into a plurality of candidate target images specifically comprises:
obtaining, by the electronic device, the plurality of candidate target images based on a key point of the first candidate target, wherein the candidate target image comprises one or more key points of the first candidate target.

7. The method according to claim 6, wherein the plurality of candidate target images comprise a first candidate target image and a second candidate target image; and
the first candidate target image and the second candidate target image comprise a same key point of the first candidate target, and a quantity of key points of the first candidate target comprised in the second candidate target image is greater than a quantity of key points of the first candidate target comprised in the first candidate target image; or
a key point of the first candidate target comprised in the first candidate target image is different from a key point of the first candidate target comprised in the second candidate target image.

8. The method according to any one of claims 1 to 7, wherein the plurality of tracking target images comprise the first tracking target image and the second tracking target image, the plurality of tracking target images are obtained from the tracking target, the plurality of candidate target images comprise the first candidate target image and the second candidate target image, the plurality of candidate target images are obtained from the first candidate target, the quantity of key points of the tracking target comprised in the first tracking target image is the same as the quantity of key points of the first candidate target comprised in the first candidate target image, the quantity of key points of the tracking target comprised in the second tracking target image is the same as the quantity of key points of the first candidate target comprised in the second candidate target image, the quantity of key points of the tracking target comprised in the first tracking target image is greater than the quantity of key points of the tracking target comprised in the second tracking target image, the first tracking target feature is extracted from the first tracking target image, and the first candidate target feature is extracted from the first candidate target image.

9. The method according to any one of claims 1 to 8, wherein after the determining, by the electronic device when a first candidate target feature in the plurality of candidate target features matches a first tracking target feature in the plurality of tracking target features, that the first candidate target is the tracking target, the method further comprises:
storing, by the electronic device, a second candidate target in a feature library that stores the plurality of tracking target features, wherein the second candidate feature is extracted by the electronic device from a third candidate target image in the plurality of candidate target images, and a quantity of key points of the first candidate target comprised in the third candidate target image is greater than a quantity of key points of the tracking target comprised in the plurality of tracking target images.

10. The method according to claim 8 or 9, wherein after the determining, by the electronic device when a first candidate target feature in the plurality of candidate target features matches a first tracking target feature in the plurality of tracking target features, that the first candidate target is the tracking target, the method further comprises:
if a difference between M and K is equal to a preset threshold, storing, by the electronic device, the first candidate target feature in the feature library that stores the plurality of tracking target features.

11. The method according to claim 10, wherein the storing, by the electronic device, the first candidate target feature in the feature library that stores the plurality of tracking target features specifically comprises:
replacing, by the electronic device with the first candidate target feature, the first tracking target feature in the feature library that stores the plurality of tracking target features.

12. The method according to any one of claims 1 to 11, wherein the method further comprises:
detecting, by the electronic device, the tracking target in the M^{th} frame of image;
displaying, by the electronic device, a detection box in the first user interface, wherein the detection box is used to circle the tracking target;
receiving, by the electronic device, a first user operation, wherein the first operation is used to select the tracking target in the first user interface; and
determining, by the electronic device, the tracking target in response to the first user operation.

13. The method according to any one of claims 1 to 12, wherein the method further comprises:
detecting, by the electronic device, one or more candidate targets in the K^{th} frame of image, wherein the one or more candidate targets comprise the first candidate target, and an attribute of the one or more candidate targets is the same as an attribute of the tracking target.

14. An electronic device, comprising a display, a processor, and a memory, wherein the memory is coupled to the processor, and the display is coupled to the processor;
the display is configured to: display a first user interface, wherein an M^{th} frame of image is displayed in the first user interface, and the M^{th} frame of image comprises a tracking target; and display a second user interface, wherein a K^{th} frame of image is displayed in the second user interface, and the K^{th} frame of image comprises a first candidate target;
the processor is configured to: obtain a plurality of tracking target features of the tracking target; obtain a plurality of candidate target features of the first candidate target; and when a first candidate target feature in the plurality of candidate target features matches a first tracking target feature in the plurality of tracking target features, determine that the first candidate target is the tracking target; and
the memory is configured to store the plurality of tracking target features.

15. The electronic device according to claim 14, wherein the processor is specifically configured to:
obtain a plurality of tracking target images based on the tracking target, wherein the tracking target image comprises a part or all of the tracking target; and
perform feature extraction on the plurality of tracking target images, to obtain the plurality of tracking target features, wherein a quantity of the plurality of tracking target features is equal to a quantity of the plurality of tracking target images.

16. The electronic device according to claim 15, wherein the processor is specifically configured to:
obtain the plurality of tracking target images based on a key point of the tracking target, wherein the tracking target image comprises one or more key points of the tracking target.

17. The electronic device according to claim 16, wherein the plurality of tracking target images comprise a first tracking target image and a second tracking target image; and
the first tracking target image and the second tracking target image comprise a same key point of the tracking target, and a quantity of key points of the tracking target comprised in the second tracking target image is greater than a quantity of key points of the tracking target comprised in the first tracking target image; or
a key point of the tracking target comprised in the first tracking target image is different from a key point of the tracking target comprised in the second tracking target image.

18. The electronic device according to any one of claims 14 to 17, wherein the processor is configured to:
obtain a plurality of candidate target images based on the first candidate target, wherein the plurality of candidate target images comprise a part or all of the first candidate target; and
perform feature extraction on the plurality of candidate target images, to obtain the plurality of candidate target features, wherein a quantity of the plurality of candidate target features is equal to a quantity of the plurality of candidate target features.

19. The electronic device according to claim 18, wherein the processor is specifically configured to:
obtain the plurality of candidate target images based on a key point of the first candidate target, wherein the candidate target image comprises one or more key points of the first candidate target.

20. The electronic device according to claim 19, wherein the plurality of candidate target images comprise a first candidate target image and a second candidate target image; and
the first candidate target image and the second candidate target image comprise a same key point of the first candidate target, and a quantity of key points of the first candidate target comprised in the second candidate target image is greater than a quantity of key points of the first candidate target comprised in the first candidate target image; or
a key point of the first candidate target comprised in the first candidate target image is different from a key point of the first candidate target comprised in the second candidate target image.

21. The electronic device according to any one of claims 14 to 20, wherein the plurality of tracking target images comprise the first tracking target image and the second tracking target image, the plurality of tracking target images are obtained from the tracking target, the plurality of candidate target images comprise the first candidate target image and the second candidate target image, the plurality of candidate target images are obtained from the first candidate target, the quantity of key points of the tracking target comprised in the first tracking target image is the same as the quantity of key points of the first candidate target comprised in the first candidate target image, the quantity of key points of the tracking target comprised in the second tracking target image is the same as the quantity of key points of the first candidate target comprised in the second candidate target image, the quantity of key points of the tracking target comprised in the first tracking target image is greater than the quantity of key points of the tracking target comprised in the second tracking target image, the first tracking target feature is extracted from the first tracking target image, and the first candidate target feature is extracted from the first candidate target image.

22. The electronic device according to claim 21, wherein the memory is configured to:
store a second candidate target in a feature library that stores the plurality of tracking target features, wherein the second candidate feature is extracted by the processor from a third candidate target image in the plurality of candidate target images, and a quantity of key points of the first candidate target comprised in the third candidate target image is greater than a quantity of key points of the tracking target comprised in the plurality of tracking target images.

23. The electronic device according to claim 21, wherein the memory is configured to:
if a difference between M and K is equal to a preset threshold, store the first candidate target feature in the feature library that stores the plurality of tracking target features.

24. The electronic device according to claim 23, wherein the memory is configured to:
replace, with the first candidate target feature, the first tracking target feature in the feature library that stores the plurality of tracking target features.

25. A computer storage medium, comprising computer instructions, wherein when the computer instructions are run on an electronic device, the electronic device is enabled to perform the method according to any one of claims 1 to 13.
